# EUROPEAN PATENT APPLICATION

(11) **EP 4 794 410 A1**
(43) Date of publication of application: **19.08.2026**
(21) Application number: 24890444.3
(22) Date of filing: 21.10.2024
(51) Int. Cl.: H04W 56/00, H04L 7/00, H04J 3/06

(54) **CLOCK SOURCE SELECTION METHOD, APPARATUS AND COMMUNICATION SYSTEM**

(30) Priority: 13.11.2023 CN 202311517550
(71) Applicant: HUAWEI TECHNOLOGIES CO., LTD., Shenzhen 518129 (CN)
(72) Inventor: LYU, Jingfei, Shenzhen, Guangdong 518129 (CN); RODRIGUES, Silvana, Shenzhen, Guangdong 518129 (CN); SHAO, Mingsong, Shenzhen, Guangdong 518129 (CN); WANG, Jinhui, Shenzhen, Guangdong 518129 (CN)
(74) Representative: Gill Jennings & Every LLP
(86) International application number: PCT/CN2024/126144
(87) International publication number: WO 2025/103086

(57) **Abstract**

A clock source selection method and apparatus, and a communication system are provided, and pertain to the field of communication technologies. The method includes: A first device obtains a first dataset and a second dataset, where the first dataset includes a first clock class and a first clock identity, and the second dataset includes a second clock identity; and the first device determines a clock source based on the first clock identity and the second clock identity when the first clock class is not superior to a clock class threshold, where the clock class threshold is configurable. In this application, time synchronization accuracy can be improved, and flexibility of clock source selection can be improved.

## Description

This application claims priority to Chinese Patent Application No. 202311517550.6, filed on November 13, 2023 and entitled "CLOCK SOURCE SELECTION METHOD AND APPARATUS, AND COMMUNICATION SYSTEM", which is incorporated herein by reference in its entirety.

### TECHNICAL FIELD

This application relates to the field of communication technologies, and in particular, to a clock source selection method and apparatus, and a communication system.

### BACKGROUND

To meet a service transmission requirement, time synchronization needs to be performed between different devices in a network, so that a time deviation between different devices is small. For example, a time deviation between different base stations in the network is within 3 µs (microsecond). That is, a time deviation between time of each base station and an absolute time reference is within ±1.5 µs (that is, [-1.5 µs, +1.5 µs]). The absolute time reference may be time of a satellite system, and the satellite system is, for example, a global positioning system (global positioning system, GPS) or a BeiDou positioning system.

Currently, a 1588 synchronization technology may be used to implement time synchronization between different devices. Specifically, two 1588 servers may be deployed in the network. Each of the two 1588 servers receives a satellite signal from the satellite system, and synchronizes with the time of the satellite system based on the received satellite signal. Each of the two 1588 servers sends a 1588 message carrying grandmaster clock (grandmaster, GM) information based on a status of the received satellite signal. A device in the network selects one of the two 1588 servers as a clock source based on GM information carried in a received 1588 message and a best master clock (best master clock, BMC) source selection algorithm, and synchronizes with time of the clock source. The full name of grandmaster clock in English is grandmaster clock, which corresponds to an English abbreviation GMC. In a related standard, the full name of grandmaster clock in English is abbreviated as grandmaster, which corresponds to an English abbreviation GM. The grandmaster clock is also referred to as a grandmaster clock (grandmaster clock). Based on different actual situations, a clock source selected by any device in the network may be a grandmaster clock source or a master clock (master clock) source. The master clock source is a previous-hop device (which may be a 1588 server or another network device) of the device, and the master clock source is on a 1588 synchronization path. The grandmaster clock source is a source device (for example, a 1588 server) tracked by the device.

However, determining the clock source based on the current BMC source selection algorithm tends to result in low time synchronization accuracy.

### SUMMARY

This application provides a clock source selection method and apparatus, and a communication system, to improve time synchronization accuracy. Technical solutions of this application are as follows:

According to a first aspect, a clock source selection method is provided. The method includes: A first device obtains a first dataset and a second dataset, where the first dataset includes a first clock class and a first clock identity, and the second dataset includes a second clock identity; and the first device determines a clock source based on the first clock identity and the second clock identity when the first clock class is not superior to a clock class threshold, where the clock class threshold is configurable. After the first device determines the clock source, the first device performs time synchronization based on a clock message (for example, a 1588 message) received from the clock source.

Based on different relationships between the first clock identity and the second clock identity, the clock source determined by the first device based on the first clock identity and the second clock identity may be a grandmaster clock source or a master clock source. For example, when the first clock identity is different from the second clock identity, the clock source determined by the first device based on the first clock identity and the second clock identity is a grandmaster clock source. When the first clock identity is the same as the second clock identity, the clock source determined by the first device based on the first clock identity and the second clock identity is a master clock source. The grandmaster clock source is a GM. The master clock source is a previous-hop device of the first device, and the master clock source is on a clock synchronization path (for example, a 1588 synchronization path).

In the technical solution provided in this application, when the first clock class is not superior to the clock class threshold, it indicates that clock performance corresponding to the first clock class is poor (for example, clock accuracy is low). Therefore, the first device determines the clock source based on the first clock identity and the second clock identity, so that when the first clock class is not superior to the clock class threshold, clock sources determined by different devices may be a same clock source. For example, when the first clock class is not superior to the clock class threshold and the first clock identity is different from the second clock identity, clock sources determined by different devices may be a same grandmaster clock source, and different devices may track a same grandmaster clock source. This can reduce a difference in time synchronization accuracy between different devices, improve the time synchronization accuracy, and ensure that a time deviation between different devices (for example, base stations) is maintained within a required range (for example, 3 µs). In addition, the clock class threshold is configurable. Therefore, flexibility of determining, by the first device, the clock source based on the first clock class and the flexibly configured clock class threshold is high, and it can be ensured that the clock class threshold is compatible with the current International Telecommunication Union-Telecommunication Standardization Sector (International Telecommunication Union-Telecommunication Standardization Sector, ITU-T) G.8275.1 standard and an ITU-T G.8275.2 standard. In this application, it can be ensured that a time deviation between different devices (for example, base stations) is maintained within a required range (for example, 3 µs), and it can be ensured that a 5th generation mobile communication technology (5th Generation Mobile Communication Technology, 5G) service can work normally.

Optionally, the first dataset includes a first quantity of hops, the second dataset includes a second quantity of hops, and the method further includes: The first device determines a clock source based on the first quantity of hops and the second quantity of hops when the first clock class is superior to the clock class threshold. For example, the first device determines the clock source based on the first quantity of hops and the second quantity of hops according to a shortest path principle. The clock source determined by the first device based on the first quantity of hops and the second quantity of hops includes a grandmaster clock source and/or a master clock source. For example, the first dataset corresponds to a first clock message, the second dataset corresponds to a second clock message, the first quantity of hops is a quantity of hops through which the first clock message passes, and the second quantity of hops is a quantity of hops through which the second clock message passes. The first device determines a smallest quantity of hops in the first quantity of hops and the second quantity of hops, and the first device determines the clock source based on a clock message corresponding to the smallest quantity of hops. For example, the first device determines a transmission path of the clock message corresponding to the smallest quantity of hops as a clock synchronization path (for example, a 1588 synchronization path), and the first device determines a previous-hop device of the first device on the clock synchronization path as the clock source. When the previous-hop device is a clock server, the clock source is a master clock source, and the clock source is also a grandmaster clock source. When the previous-hop device is a device between a clock server and the first device, the clock source is a master clock source, and the clock server is a grandmaster clock source. After the first device determines the clock source based on the clock message corresponding to the smallest quantity of hops, the first device adjusts time of the first device based on time information carried in the clock message corresponding to the smallest quantity of hops, to perform time synchronization with the clock source.

In the technical solution provided in this application, when the first clock class is superior to the clock class threshold, it indicates that clock performance corresponding to the first clock class is good (for example, clock accuracy is high). Therefore, the first device determines the clock source based on the first quantity of hops and the second quantity of hops, so that a clock message (for example, a clock message directly or indirectly received by the first device from the clock source) corresponding to the clock source determined by the first device can pass through a small quantity (for example, a smallest quantity) of hops to reach the first device. This helps improve time synchronization accuracy of the first device (each time the clock message passes through a device, a clock accuracy error carried in the clock message deteriorates, and a small quantity of devices through which the clock message corresponding to the clock source determined by the first device passes to reach the first device indicates high clock accuracy carried in the clock message). In this application, the clock message originates from a clock server, a clock message originating from any clock server originates from the clock server, a source end of the clock message originating from the any clock server is the clock server, and a source address of the clock message originating from the any clock server is an address of the clock server. The clock message originating from the any clock server includes at least one of the following: a clock message generated by the clock server and a clock message generated based on the clock message generated by the clock server (for example, a new clock message obtained by modifying the clock message generated by the clock server, where the modification includes modifying information in, adding information to, or deleting information from the clock message).

Optionally, that the first clock class is not superior to the clock class threshold includes that the first clock class is greater than the clock class threshold. Correspondingly, that the first clock class is superior to the clock class threshold includes that the first clock class is less than or equal to (that is, not greater than) the clock class threshold. Optionally, the clock class threshold is a clock class indicating that a clock device is in a mode of normal time signal tracking. For example, the clock class threshold is 6. The time signal may be a satellite signal. The clock device may be a clock server or another device having a clock function. For example, the clock device may be a clock server or a network device connected between a clock server and the first device.

In the technical solution provided in this application, when the clock class threshold is a clock class indicating that a clock device is in a mode of normal time signal tracking, and the first clock class is greater than the clock class threshold (that is, the first clock class is not superior to the clock class threshold), it indicates that clock performance of the clock device is poor. For example, the clock device loses a time signal, which may be specifically that the clock device loses a time signal and the clock device is in a mode of being available in holdover time (that is, the clock device loses a time signal and the clock performance of the clock device is available), or the clock device loses a time signal and the clock performance of the clock device is unavailable. In this case, the first device determines the clock source based on the first clock identity and the second clock identity, so that clock sources determined by different devices may be a same grandmaster clock source, and different devices may track a same grandmaster clock source. This can improve time synchronization accuracy, and ensure that a time deviation between different devices (for example, base stations) is maintained within a required range (for example, 3 µs). When the clock class threshold is a clock class indicating that a clock device is in a mode of normal time signal tracking, and the first clock class is less than or equal to the clock class threshold (that is, the first clock class is superior to the clock class threshold), it indicates that clock performance of the clock device is good. For example, the clock device is in the mode of normal time signal tracking, and the clock device does not lose a time signal. In this case, the first device determines the clock source based on the first quantity of hops and the second quantity of hops, for example, the first device determines the clock source based on the first quantity of hops and the second quantity of hops according to a shortest path principle, so that a clock message corresponding to the clock source determined by the first device passes through a small quantity (for example, a smallest quantity) of hops to reach the first device. This helps improve time synchronization accuracy, and ensure that a time deviation between different devices (for example, base stations) is maintained within a required range (for example, 3 µs). That the clock performance of the clock device is available or unavailable means that performance of a time signal output by the clock device is available or unavailable.

Optionally, that the first clock class is not superior to the clock class threshold includes that the first clock class is greater than or equal to (that is, not less than) the clock class threshold. Correspondingly, that the first clock class is superior to the clock class threshold includes that the first clock class is less than the clock class threshold. Optionally, the clock class threshold is a clock class indicating that a clock device loses a time signal and the clock device is in a mode of being available in holdover time. For example, the clock class threshold is 7. The time signal may be a satellite signal. The clock device may be a clock server or another device having a clock function. For example, the clock device may be a clock server or a network device connected between a clock server and the first device.

In the technical solution provided in this application, when the clock class threshold is a clock class indicating that a clock device loses a time signal and the clock device is in a mode of being available in holdover time, and the first clock class is greater than or equal to the clock class threshold (that is, the first clock class is not superior to the clock class threshold), it indicates that clock performance of the clock device is poor. For example, the clock device loses a time signal and the clock device is in the mode of being available in holdover time (that is, the clock device loses a time signal and the clock performance of the clock device is available), or the clock device loses a time signal and the clock performance of the clock device is unavailable. In this case, the first device determines the clock source based on the first clock identity and the second clock identity, so that clock sources determined by different devices may be a same grandmaster clock source, and different devices may track a same grandmaster clock source. This can improve time synchronization accuracy, and ensure that a time deviation between different devices is within a required range (for example, 3 µs). When the clock class threshold is a clock class indicating that a clock device loses a time signal and the clock device is in a mode of being available in holdover time, and the first clock class is less than the clock class threshold (that is, the first clock class is superior to the clock class threshold), it indicates that clock performance of the clock device is good. For example, the clock device is in a mode of normal time signal tracking, and the clock device does not lose a time signal. In this case, the first device determines the clock source based on the first quantity of hops and the second quantity of hops, for example, the first device determines the clock source based on the first quantity of hops and the second quantity of hops according to a shortest path principle, so that a clock message corresponding to the clock source determined by the first device passes through a small quantity (for example, a smallest quantity) of hops to reach the first device. This helps improve time synchronization accuracy, and ensure that a time deviation between different devices (for example, base stations) is maintained within a required range (for example, 3 µs). That the clock performance of the clock device is available or unavailable means that performance of a time signal output by the clock device is available or unavailable.

Optionally, that the first clock class is not superior to the clock class threshold includes that the first clock class is not in a clock class set, that the first clock class is superior to the clock class threshold includes that the first clock class is in the clock class set, and the clock class set is configurable. Optionally, the clock class threshold is in the clock class set, and a clock class in the clock class set includes a clock class indicating that a clock device is in a mode of normal time signal tracking, and/or a clock class indicating that a clock device loses a time signal and the clock device is in a mode of being available in holdover time, and/or a default clock class. For example, if the clock class indicating that a clock device is in a mode of normal time signal tracking is 6, the clock class indicating that a clock device loses a time signal and the clock device is in a mode of being available in holdover time is 7, and the default clock class is 127, the clock class set may be any one of the following: {6}, {7}, {127}, {6, 127}, {7, 127}, {6, 7}, and {6, 7, 127}.

In the technical solution provided in this application, because the clock class threshold is in the clock class set, and the clock class set is configurable, the clock class threshold is configurable, and it can be ensured that the clock class threshold is compatible with the current ITU-T G.8275.1 standard and the ITU-T G.8275.2 standard. The clock class threshold may be configured by configuring the clock class set. Through configuration of the clock class threshold, different devices are flexibly controlled to track a same clock server or track a plurality of clock servers (for example, two clock servers) according to the shortest path principle.

Optionally, an attribute set (defaultDS) of the first device includes a clock class set (clockClassSet) field, and the clockClassSet field is used to record the clock class set (clockClassSet). Herein, defaultDS of the first device is a default dataset (default dataset) of the first device, and the clockClassSet field included in defaultDS may be represented as a defaultDS.clockClassSet field.

Optionally, the attribute set (defaultDS) of the first device includes a clock class threshold (clockClassThreshold) field, and the clockClassThreshold field is used to record the clock class threshold (clockClassThreshold). Herein, defaultDS of the first device is a default dataset (default dataset) of the first device, and the clockClassThreshold field included in defaultDS may be represented as a defaultDS.clockClassThreshold field. The clock class threshold is also referred to as a clock class threshold.

Optionally, that the first device determines the clock source based on the first clock identity and the second clock identity includes: When the first clock identity is different from the second clock identity, the first device determines a target clock identity in the first clock identity and the second clock identity, and the first device determines a clock server identified by the target clock identity as the clock source, where the clock source is a grandmaster clock source. For example, each of the first clock identity and the second clock identity is expressed by using a value or a character, and the target clock identity is a smallest clock identity in the first clock identity and the second clock identity.

Optionally, that the first device determines the clock source based on the first clock identity and the second clock identity includes: When the first clock identity is the same as the second clock identity, the first device determines the clock source based on the first quantity of hops in the first dataset and the second quantity of hops in the second dataset. The clock source determined by the first device based on the first quantity of hops and the second quantity of hops includes a grandmaster clock source and/or a master clock source. For example, the first dataset corresponds to a first clock message, the second dataset corresponds to a second clock message, the first quantity of hops is a quantity of hops through which the first clock message passes, and the second quantity of hops is a quantity of hops through which the second clock message passes. The first device determines a smallest quantity of hops in the first quantity of hops and the second quantity of hops, and the first device determines the clock source based on a clock message corresponding to the smallest quantity of hops. For example, the first device determines a transmission path of the clock message corresponding to the smallest quantity of hops as a clock synchronization path (for example, a 1588 synchronization path), and the first device determines a previous-hop device of the first device on the clock synchronization path as the clock source. When the previous-hop device is a clock server, the clock source is a master clock source, and the clock source is also a grandmaster clock source. When the previous-hop device is a device between a clock server and the first device, the clock source is a master clock source, and the clock server is a grandmaster clock source.

Each of the first clock identity and the second clock identity is used to identify a clock server. When the first clock identity is different from the second clock identity, it indicates that a clock server identified by the first clock identity and a clock server identified by the second clock identity are different (that is, are not a same clock server). When the first clock identity is the same as the second clock identity, it indicates that a clock server identified by the first clock identity and a clock server identified by the second clock identity are the same (that is, are a same clock server). Optionally, each of the first clock identity and the second clock identity is expressed by using a value or a character. That the first clock identity is the same as the second clock identity may also be described as that the first clock identity is equal to the second clock identity, and that the first clock identity is different from the second clock identity may also be described as that the first clock identity is not equal to the second clock identity.

Optionally, that the first device obtains the first dataset and the second dataset includes: The first device receives the first clock message and the second clock message, the first device generates the first dataset based on the first clock message, and the first device generates the second dataset based on the second clock message.

Optionally, the method further includes: When the first dataset and the second dataset meet a preset condition, the first device determines whether the first clock class is superior to the clock class threshold.

Optionally, the first dataset further includes at least one of the following: first clock accuracy (clock accuracy), a first clock offset scaled log variance (clock offset scaled log variance), a first clock priority (clock priority), and a first local priority (local priority); and the second dataset further includes at least one of the following: a second clock class (clock class), second clock accuracy, a second clock offset scaled log variance, a second clock priority, and a second local priority. Each of the first clock accuracy, the first clock offset scaled log variance, the first clock priority, the first local priority, the second clock class, the second clock accuracy, the second clock offset scaled log variance, the second clock priority, and the second local priority is expressed by using a value or a character. The preset condition includes at least one of the following: The first clock class is equal to the second clock class, the first clock accuracy is equal to the second clock accuracy, the first clock offset scaled log variance is equal to the second clock offset scaled log variance, the first clock priority is equal to the second clock priority, and the first local priority is equal to the second local priority.

Optionally, the first clock class, the first clock identity, the first clock accuracy, the first clock offset scaled log variance, and the first clock priority are all GM information carried in the first clock message, and the second clock class, the second clock identity, the second clock accuracy, the second clock offset scaled log variance, and the second clock priority are all GM information carried in the second clock message. The local priority is a priority of a port for receiving the clock message in the device. For example, the first local priority is a priority of a port for receiving the first clock message in the first device, and the second local priority is a priority of a port for receiving the second clock message in the first device. For example, the first clock class is a GM clock class in the first dataset, the first clock identity is a GM clock identity in the first dataset, the first clock accuracy is GM clock accuracy in the first dataset, the first clock offset scaled log variance is a GM clock offset scaled log variance in the first dataset, and the first clock priority is GM clock priority2 in the first dataset; and the second clock class is a GM clock class in the second dataset, the second clock identity is a GM clock identity in the second dataset, the second clock accuracy is GM clock accuracy in the second dataset, the second clock offset scaled log variance is a GM clock offset scaled log variance in the second dataset, and the second clock priority is GM clock priority2 in the second dataset. The GM clock class, the GM clock identity, the GM clock accuracy, the GM clock offset scaled log variance, and GM clock priority2 are described in the ITU-T G.8275.1 standard and the ITU-T G.8275.2 standard. In the Institute of Electrical and Electronics Engineers (Institute of Electrical and Electronics Engineers, IEEE) 1588 version 2 (version 2, v2) IEEE 1588v2 standard, the GM clock class is briefly referred to as a GM class, the GM clock identity is briefly referred to as a GM identity, GM clock priority2 is briefly referred to as GM priority2, the GM clock accuracy is briefly referred to as GM accuracy, and the GM clock offset scaled log variance is briefly referred to as GM offsetscaledlogvariance.

Optionally, the clock server is a 1588 server, and the clock message is a 1588 message. A full name of 1588 is IEEE 1588.

According to a second aspect, a clock source selection apparatus is provided and used in a first device. The clock source selection apparatus includes modules configured to perform the clock source selection method provided in any one of the first aspect or the optional manners of the first aspect. These modules may be implemented based on software, hardware, or a combination of software and hardware, and these modules may be randomly combined or split based on specific implementation.

According to a third aspect, a clock source selection apparatus is provided and used in a first device, and includes a memory and a processor. The memory is configured to store a computer program, and the processor is configured to execute the computer program stored in the memory, to enable the clock source selection apparatus to perform the clock source selection method provided in any one of the first aspect or the optional manners of the first aspect.

According to a fourth aspect, a clock source selection apparatus is provided and used in a first device, and includes a main control board and an interface board. The main control board and the interface board are configured to implement the clock source selection method provided in any one of the first aspect or the optional manners of the first aspect. The interface board is also referred to as a line board.

According to a fifth aspect, a communication system is provided, and includes a first device and at least two clock devices. The first device includes the clock source selection apparatus provided in the second aspect to the fourth aspect, and the first device is configured to determine a clock source in the at least two clock devices.

Optionally, the first device includes any one of the following: a network element (network element, NE) and a base station. The network element is also referred to as a network device, and the network element and the base station are collectively referred to as a communication device. The network element includes a router, a switch, a packet transport network (packet transport network, PTN) device, an optical transport network (optical transport network, OTN) device, or the like.

According to a sixth aspect, a computer-readable storage medium is provided. The computer-readable storage medium stores a computer program, and when the computer program is executed, the clock source selection method provided in any one of the first aspect or the optional manners of the first aspect is implemented.

According to a seventh aspect, a computer program product is provided. The computer program product includes a program or code, and when the program or the code is executed, the clock source selection method provided in any one of the first aspect or the optional manners of the first aspect is implemented.

According to an eighth aspect, a chip is provided. The chip includes a programmable logic circuit and/or program instructions. When the chip runs, the clock source selection method provided in any one of the first aspect or the optional manners of the first aspect is implemented.

For technical effects of the second aspect to the eighth aspect, refer to the technical effects of the first aspect and the optional implementations of the first aspect. Details are not described herein again.

### BRIEF DESCRIPTION OF DRAWINGS

FIG. 1 is a diagram of a 1588 network according to an embodiment of this application;
FIG. 2 is a diagram of a 1588 network including a 1588 synchronization path according to an embodiment of this application;
FIG. 3 is a diagram of another 1588 network including a 1588 synchronization path according to an embodiment of this application;
FIG. 4 is a flowchart of a clock source selection method according to an embodiment of this application;
FIG. 5A, FIG. 5B, and FIG. 5C are a flowchart of another clock source selection method according to an embodiment of this application;
FIG. 6A, FIG. 6B, and FIG. 6C are a flowchart of still another clock source selection method according to an embodiment of this application;
FIG. 7A, FIG. 7B, and FIG. 7C are a flowchart of yet another clock source selection method according to an embodiment of this application;
FIG. 8A, FIG. 8B, and FIG. 8C are a flowchart of yet another clock source selection method according to an embodiment of this application;
FIG. 9 is a diagram of a first device according to an embodiment of this application;
FIG. 10 is a diagram of a clock source selection apparatus according to an embodiment of this application;
FIG. 11 is a diagram of another clock source selection apparatus according to an embodiment of this application; and
FIG. 12 is a diagram of still another clock source selection apparatus according to an embodiment of this application.

### DESCRIPTION OF EMBODIMENTS

The following further describes in detail implementations of this application with reference to accompanying drawings.

To meet a service transmission requirement, time synchronization needs to be performed between different devices in a network, so that a time deviation between different devices is small. For example, a current 5th generation mobile communication technology (5th Generation Mobile Communication Technology, 5G) requires a time deviation between base stations to be within 3 µs, that is, a time deviation between time of each base station and an absolute time reference is within ±1.5 µs (that is, [-1.5 µs, +1.5 µs]). Therefore, time synchronization needs to be performed to enable the time deviation between the base stations to meet this requirement. The absolute time reference may be time of a satellite system, and the satellite system is, for example, a global positioning system (global positioning system, GPS) or a BeiDou positioning system.

Currently, there are two time synchronization technologies. One technology is to install a satellite signal receiver, for example, a GPS receiver or a BeiDou receiver, on a device (for example, a base station) that needs to perform time synchronization, and the device synchronizes with the time of the satellite system based on a satellite signal received by the satellite signal receiver on the device. Time synchronization accuracy in this technology can reach approximately ±0.1 µs (that is, [-0.1 µs, +0.1 µs]), and the time synchronization accuracy is high. However, the satellite signal is prone to interference and spoofing, resulting in low security of this technology.

The other technology is a 1588 synchronization technology. In this technology, a 1588 server is used to implement time synchronization between different devices. For example, the 1588 server performs time synchronization with the satellite system based on a received satellite signal, and the 1588 server transmits a 1588 message carrying time information to a base station based on the received satellite signal through a bearer network, and the base station adjusts time of the base station based on the time information carried in the received 1588 message, to perform time synchronization. Time synchronization accuracy in the 1588 synchronization technology is approximately ±1 µs (that is, [-1 µs, +1 µs]), and can meet the synchronization requirement of ±1.5 µs. In addition, the 1588 server is deployed at a secure location, making interference and security attacks difficult. In this case, a time synchronization process is not prone to interference and spoofing, and security is high. To perform security protection for time synchronization, two 1588 servers are usually deployed in the network. Each of the two 1588 servers receives a satellite signal from the satellite system, and synchronizes with the time of the satellite system based on the received satellite signal. In addition, each of the two 1588 servers sends a 1588 message carrying time information based on the received satellite signal. A device (including a network device, a base station, or the like) in the network performs clock source selection (that is, selects a clock source) based on a received 1588 message, and performs time synchronization with the selected clock source, for example, adjusts time of the device based on time information carried in the 1588 message received from the selected clock source, to perform time synchronization. The time information carried in the 1588 message sent by each 1588 server is time information of the 1588 server. The network device is also referred to as a network element (network element, NE). The network element includes a router, a switch, a packet transport network (packet transport network, PTN) device, an optical transport network (optical transport network, OTN) device, or the like. The network element and the base station are collectively referred to as a communication device. Based on different actual situations, a clock source selected by any device in the network may be a grandmaster clock source or a master clock source. The master clock source is a previous-hop device (which may be a 1588 server or another network device) of the device, and the master clock source is on a 1588 synchronization path. The grandmaster clock source is a source device (for example, a 1588 server) tracked by the device. In a process of transmitting the 1588 message in the network, information carried in the 1588 message may be modified by a device in the network, and the device may perform sending after the 1588 message is modified.

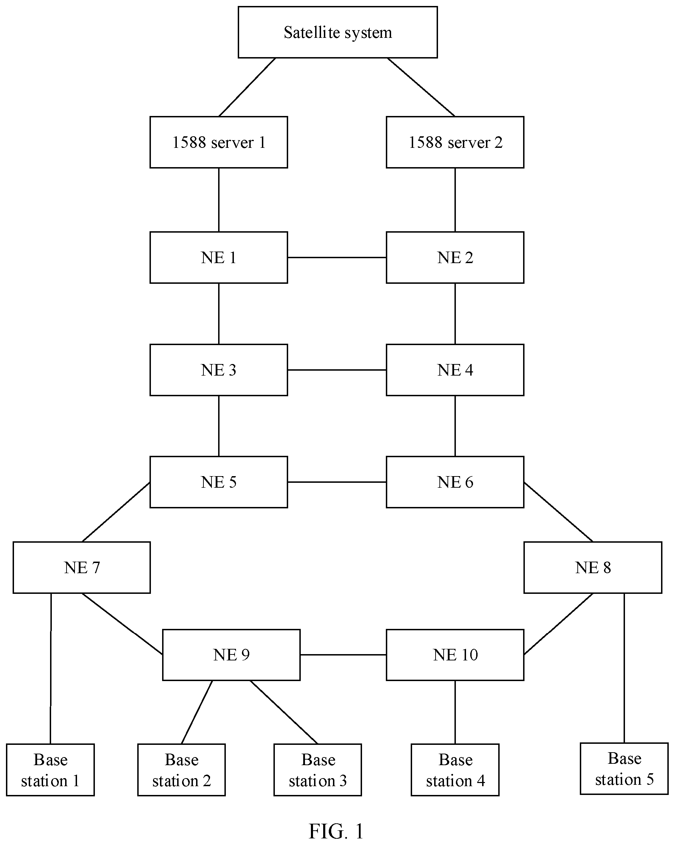

For ease of description, a network in which time synchronization is performed based on the 1588 synchronization technology is referred to as a 1588 synchronization network, briefly referred to as a 1588 network. FIG. 1 is a diagram of a 1588 network according to an embodiment of this application. As shown in FIG. 1, the 1588 network includes 1588 servers 1 and 2, NEs 1 to 10 (that is, network elements 1 to 10 and network devices 1 to 10), and base stations 1 to 5. Each of the 1588 servers 1 and 2 is communicatively connected to a satellite system, and each of the 1588 servers 1 and 2 is communicatively connected to the base stations 1 to 5 through the NEs 1 to 10. Each of the 1588 servers 1 and 2 is configured to: receive a satellite signal from the satellite system, synchronize with time of the satellite system based on the received satellite signal, and transmit a 1588 message carrying time information to the base stations 1 to 5 through the NEs 1 to 10 based on the received satellite signal. Each base station in the base stations 1 to 5 is configured to: perform clock source selection (that is, select a clock source) based on a received 1588 message, and perform time synchronization with the selected clock source, for example, adjust time of the base station based on time information carried in the 1588 message received from the selected clock source, to perform time synchronization with the clock source. In addition, each NE in the NEs 1 to 10 also performs clock source selection based on a received 1588 message, and performs time synchronization with the selected clock source. That is, all of the NEs 1 to 10 and the base stations 1 to 5 are devices that need to perform time synchronization. Optionally, the NEs 1 to 10 further generate a new 1588 message based on information carried in the received 1588 message, and send the new message, which is similar to modifying and sending a part of content of the received 1588 message, for example, modifying the information (for example, clock accuracy) carried in the 1588 message, a quantity of hops, and the like. In this embodiment of this application, the 1588 message originates from the 1588 server, a 1588 message originating from any 1588 server is a 1588 message originating from the 1588 server, a source end of the 1588 message originating from the any 1588 server is the 1588 server, and a source address is an address of the 1588 server. Optionally, the 1588 message originating from the any 1588 server includes at least one of the following: a 1588 message generated by the 1588 server and a 1588 message newly generated based on the 1588 message generated by the 1588 server (for example, a new 1588 message obtained by modifying the 1588 message generated by the 1588 server, where the modification includes modifying information, adding information to, or deleting information from the 1588 message).

In an optional embodiment, each of the 1588 servers 1 and 2 includes a satellite signal receiver, to receive a satellite signal transmitted by the satellite system. The satellite system may include a plurality of satellites, and each of the plurality of satellites is configured to transmit a satellite signal. Optionally, each of the 1588 servers 1 and 2 is communicatively connected to the base stations 1 to 5 through a bearer network, and all of the NEs 1 to 10 belong to the bearer network. In an example, the bearer network includes an access layer network and a core layer network, NEs 1 to 4 belong to the core layer network, and NEs 5 to 10 belong to the access layer network.

Although the 1588 server also receives a satellite signal from the satellite system, and a time synchronization process between devices in the 1588 network is also related to the satellite signal transmitted by the satellite system, a quantity of 1588 servers is small and a deployment location is secure, making interference and security attacks difficult. Therefore, the time synchronization process between devices in the 1588 network is not prone to interference and spoofing, and security is high. When the satellite signal is normal, time synchronization accuracy of each of the two 1588 servers can reach approximately ±0.1 µs, and both the two 1588 servers can be used as grandmaster clock sources. That the satellite signal is normal means that the satellite signal is not interfered with or spoofed or that the satellite signal is slightly interfered with and is not spoofed. For the 1588 server, that the satellite signal is normal includes at least one of the following: The 1588 server can receive at least satellite signals transmitted by a preset quantity of satellites, and strength of the satellite signal received by the 1588 server is greater than preset strength. In the case of satellite signal, the 1588 server can normally track the satellite signal, and the 1588 server is in a mode of normal satellite signal tracking.

Currently, there are two clock source selection algorithms (or referred to as clock source selection solutions): a best master clock (best master clock, BMC) source selection algorithm defined in the Institute of Electrical and Electronics Engineers (Institute of Electrical and Electronics Engineers, IEEE) 1588 version 2 (version 2, v2) standard and a BMC source selection algorithm defined in the International Telecommunication Union-Telecommunication Standardization Sector (International Telecommunication Union-Telecommunication Standardization Sector, ITU-T) G.8275.1 standard. Both the two BMC source selection algorithms can be used by a device (including an NE, a base station, or the like) in the 1588 network to determine a clock source and determine a 1588 status of a port in the device. Therefore, a 1588 synchronization path in the 1588 network can be determined based on a 1588 status that is of a port in each device in the 1588 network and that is determined by each device. The BMC source selection algorithm defined in the IEEE 1588v2 standard is also referred to as a default BMC (default BMC) source selection algorithm, briefly referred to as default BMC (default BMC). The 1588 status of a port is also referred to as a 1588 port status. The 1588 status of a port includes a master (master, M) state, a slave (slave, S) state, or a passive (passive, P) state. A port in the M state is also referred to as an M port, a port in the S state is also referred to as an S port, and a port in the P state is also referred to as a P port.

However, in the BMC source selection algorithm defined in the IEEE 1588v2 standard, all devices in the 1588 network select a same 1588 server as clock sources (namely, grandmaster clock sources) for tracking, and all the devices can track only the same 1588 server. Consequently, some devices cannot track 1588 servers closer to the devices (namely, 1588 servers with a shorter path to the devices), but can track only 1588 servers farther away from the devices (namely, 1588 servers with a longer path to the devices). For example, some devices cannot select 1588 servers closest to the devices (namely, 1588 servers with a shortest path to the devices) as clock sources (namely, grandmaster clock sources) for tracking according to a shortest path principle. Each time the 1588 message passes through a device, clock accuracy carried in the 1588 message deteriorates. Therefore, compared with selection of a clock server farther away from a device as a clock source (namely, a grandmaster clock source) for tracking, selection of a clock server closer (for example, closest) to the device as a clock source (namely, a grandmaster clock source) for tracking can improve time synchronization accuracy. In other words, for any device, selection of a 1588 server closer to the device (namely, a 1588 server with a shorter path to the device) as a clock source (namely, a grandmaster clock source) for tracking indicates higher time synchronization accuracy of the device, and selection of a 1588 server farther away from the device (namely, a 1588 server with a longer path to the device) as a clock source (namely, a grandmaster clock source) for tracking indicates lower time synchronization accuracy of the device. In the BMC source selection algorithm defined in the IEEE 1588v2 standard, some devices cannot track a 1588 server closest to the devices. Therefore, time synchronization accuracy of these devices is low. In the BMC source selection algorithm defined in the ITU-T G.8275.1 standard, when a plurality of 1588 servers lose a time signal (for example, a satellite signal) and are in a mode of being available in holdover time (the mode of being available in holdover time may be referred to as a time holdover mode), for example, when clock classes of the plurality of 1588 servers are all 7, all devices in the 1588 network select 1588 servers closest to the devices as clock sources (namely, grandmaster clock sources) for tracking according to a shortest path principle. Therefore, different devices may track different 1588 servers in the plurality of 1588 servers. Because all of the plurality of 1588 servers are in the time holdover mode, as time goes by, a time deviation between different 1588 servers in the plurality of 1588 servers is increasingly large, resulting in an increasingly large time deviation between devices tracking these different 1588 servers, and further resulting in low time synchronization accuracy of the devices tracking these different 1588 servers. A BMC source selection algorithm defined in the ITU-T G.8275.2 standard is the same as the BMC source selection algorithm defined in the ITU-T G.8275.1 standard. Therefore, the BMC source selection algorithm defined in the G.8275.2 standard has the same problem as the BMC source selection algorithm defined in the ITU-T G.8275.1 standard.

In the BMC source selection algorithm defined in the IEEE 1588v2 standard and the BMC source selection algorithm defined in the ITU-T G.8275.1 standard, a device in the 1588 network generates a dataset (dataset) including clock source selection information based on a 1588 message received by the device, and performs clock source selection based on the clock source selection information in the dataset, and each device determines a 1588 status of a port in the device based on a 1588 message received by the device and a clock source selected by the device. The clock source selection information includes at least one of time information and a quantity of hops (steps removed). The time information may be time information of a 1588 server corresponding to the 1588 message, and the time information may be grandmaster clock (grandmaster, GM) information carried in the 1588 message. The quantity of hops may be a quantity of hops through which the 1588 message passes. For example, in the IEEE 1588v2 standard, the GM information includes a GM clock identity (GM clock identity), a GM clock priority 1 (GM clock priority1), a GM clock class (GM clock class), GM clock accuracy (GM clock accuracy), a GM clock offset scaled log variance (GM clock offset scaled log variance), and a GM clock priority 2 (GM clock priority2). In the ITU-T G.8275.1 standard, the GM information includes a GM clock identity (GM clock identity), a GM clock class (GM clock class), GM clock accuracy (GM clock accuracy), a GM clock offset scaled log variance (GM clock offset scaled log variance), and a GM clock priority 2 (GM clock priority2). In the ITU-T G.8275.1 standard, the clock source selection information further includes a local priority (local priority), and the local priority (local priority) is a priority of a port for receiving the 1588 message in the device. It should be noted that in embodiments of this application, for uniform description, the GM information in the IEEE 1588v2 standard is described as a GM clock identity, GM clock priority1, a GM clock class, GM clock accuracy, a GM clock offset scaled log variance, and GM clock priority2. In an actual IEEE 1588v2 standard, the GM clock class is briefly referred to as a GM class, the GM clock identity is briefly referred to as a GM identity, GM clock priority2 is briefly referred to as GM priority2, the GM clock accuracy is briefly referred to as GM accuracy, and the GM clock offset scaled log variance is briefly referred to as GM offsetscaledlogvariance.

The following briefly describes, with reference to the accompanying drawings, the BMC source selection algorithm defined in the IEEE 1588v2 standard and the BMC source selection algorithm defined in the G.8275.1 standard.

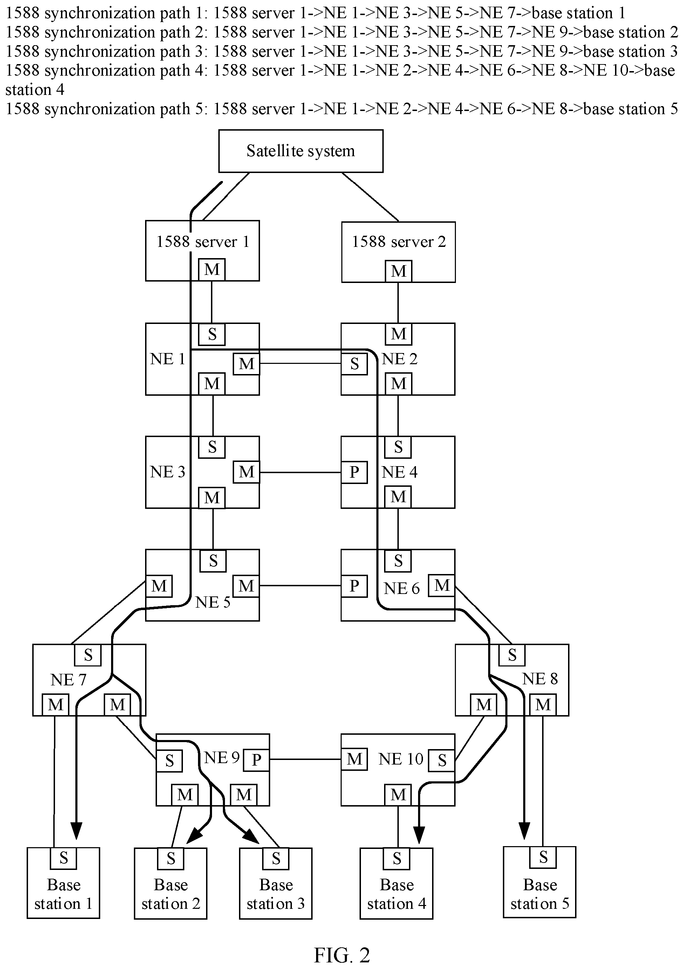

FIG. 2 is a diagram of a 1588 network including a 1588 synchronization path according to an embodiment of this application. The 1588 synchronization path in the 1588 network is a 1588 synchronization path determined based on the BMC source selection algorithm defined in the IEEE 1588v2 standard. The BMC source selection algorithm defined in the IEEE 1588v2 standard is described in FIG. 2. In FIG. 2, a small box in each device in NEs 1 to 10 and base stations 1 to 5 represents a port in the device, and a letter "M", "S", or "P" in the small box represents a 1588 status of the port represented by the small box ("M" represents an M state, "S" represents an S state, and "P" represents a P state). Meanings of small boxes in 1588 servers 1 and 2 and meanings of letters in the small boxes are the same. As shown in FIG. 2, each of the 1588 servers 1 and 2 is configured to: receive a satellite signal from a satellite system, synchronize with time of the satellite system based on the received satellite signal, and transmit a 1588 message to the base stations 1 to 5 through the NEs 1 to 10 based on the received satellite signal. Each device in the NEs 1 to 10 and the base stations 1 to 5 generates a dataset including clock source selection information based on a received 1588 message, performs clock source selection based on the clock source selection information in the dataset and the BMC source selection algorithm defined in the IEEE 1588v2 standard, and determines a 1588 status of a port in the device (or sets a 1588 status of a port in the device) based on the 1588 message received by the device and a clock source selected by the device. The 1588 servers 1 and 2 also set 1588 statuses of respective ports. For example, each 1588 server in the 1588 servers 1 and 2 sets a 1588 status of a port for sending a 1588 message in the 1588 server to the M state; each NE in the NEs 1 to 10 sets a 1588 status of a port for receiving a 1588 message of a clock source selected by the NE in the NE to the S state, and sets a 1588 status of a port for sending the 1588 message of the clock source selected by the NE in the NE to the M state; and each base station in the base stations 1 to 5 sets a 1588 status of a port for receiving a 1588 message of a clock source selected by the base station in the base station to the S state. Finally, the 1588 statuses of the respective ports that are set by the 1588 servers 1 and 2, the NEs 1 to 10, and the base stations 1 to 5 are shown in FIG. 2. Based on the 1588 statuses of the ports in the 1588 servers 1 and 2, the NEs 1 to 10, and the base stations 1 to 5, 1588 synchronization paths respectively corresponding to the base stations 1 to 5 may be determined. The 1588 synchronization path corresponding to each base station in the base stations 1 to 5 is a transmission path of a 1588 message of a clock source selected by the base station from the clock source to the base station. For example, the base station 1 corresponds to a 1588 synchronization path 1, and the 1588 synchronization path 1 is a transmission path of a 1588 message of a clock source (the 1588 server 1) selected by the base station 1 from the 1588 server 1 to the base station 1; a base station 2 corresponds to a 1588 synchronization path 2, and the 1588 synchronization path 2 is a transmission path of a 1588 message of a clock source (the 1588 server 1) selected by the base station 2 from the 1588 server 1 to the base station 2; a base station 3 corresponds to a 1588 synchronization path 3, and the 1588 synchronization path 3 is a transmission path of a 1588 message of a clock source (the 1588 server 1) selected by the base station 3 from the 1588 server 1 to the base station 3; and so on. Based on FIG. 2, it may be learned that clock sources selected by the NEs 1 to 10 and the base stations 1 to 5 are all the 1588 server 1, the clock sources of the NEs 1 to 10 and the base stations 1 to 5 are all the 1588 server 1, and all of the NEs 1 to 10 and the base stations 1 to 5 track the 1588 server 1 to perform time synchronization with the 1588 server 1. The 1588 server 2 is used as a backup. After the 1588 server 1 is faulty or unavailable, the NEs 1 to 10 and the base stations 1 to 5 switch to the 1588 server 2 during clock source selection, to track the 1588 server 2.

With reference to FIG. 2, for example, each of 1588 messages sent by the 1588 servers 1 and 2 carries GM information and a quantity of hops, the quantity of hops carried in the 1588 message is increased hop by hop, and all or a part of the GM information carried in the 1588 message is updated hop by hop. For example, for any device in the NEs 1 to 10 and the base stations 1 to 5, the device receives a 1588 message A and a 1588 message B. The device generates a dataset A based on the 1588 message A, and the device generates a dataset B based on the 1588 message B. Each of the dataset A and the dataset B includes clock source selection information. The device performs clock source selection based on clock source selection information in the dataset A, clock source selection information in the dataset B, and the BMC source selection algorithm defined in the IEEE 1588v2 standard, and the device sets a 1588 status of a port in the device based on a selected clock source. For example, the device is the NE 1, and an example in which the 1588 message A originates from the 1588 server 1, the 1588 message B originates from the 1588 server 2, and each of the dataset A and the dataset B includes a GM clock identity, a GM clock priority 1, a GM clock class, GM clock accuracy, a GM clock offset scaled log variance, a GM clock priority 2, and a quantity of hops is used for description. A quantity of hops in the dataset A is a quantity of hops through which the 1588 message A passes to reach the NE 1. A quantity of hops in the dataset B is a quantity of hops through which the 1588 message B passes to reach the NE 1. The NE 1 performs clock source selection by comparing (compare) the dataset A with the dataset B based on the BMC source selection algorithm defined in the IEEE 1588v2 standard. Specifically, the NE 1 determines whether a GM clock identity in the dataset A is the same as a GM clock identity in the dataset B. If the GM clock identity in the dataset A is the same as the GM clock identity in the dataset B, it indicates that the 1588 message A and the 1588 message B originate from a same 1588 server, and the NE 1 selects a clock source based on a quantity of hops in the dataset A and a quantity of hops in the dataset B according to a shortest path principle. If the GM clock identity in the dataset A is different from the GM clock identity in the dataset B, it indicates that the 1588 message A and the 1588 message B originate from different 1588 servers, and the NE 1 sequentially compares a GM clock priority 1 in the dataset A with a GM clock priority 1 in the dataset B, a GM clock class in the dataset A with a GM clock class in the dataset B, GM clock accuracy in the dataset A with GM clock accuracy in the dataset B, a GM clock offset scaled log variance in the dataset A with a GM clock offset scaled log variance in the dataset B, a GM clock priority 2 in the dataset A with a GM clock priority 2 in the dataset B, and the GM clock identity in the dataset A with the clock identity in the dataset B. When the NE 1 determines, through comparison, that the GM clock priority 1 in the dataset A is the same as the GM clock priority 1 in the dataset B, the GM clock class in the dataset A is the same as the GM clock class in the dataset B, the GM clock accuracy in the dataset A is the same as the GM clock accuracy in the dataset B, the GM clock offset scaled log variance in the dataset A is the same as the GM clock offset scaled log variance included in the dataset B, and the GM clock priority 2 in the dataset A is the same as the GM clock priority 2 in the dataset B, the NE 1 determines a 1588 server identified by a smallest clock identity in the GM clock identity in the dataset A and the clock identity in the dataset B as a clock source. When the NE 1 determines, through comparison, that any GM information in the GM clock priority 1, the GM clock class, the GM clock accuracy, the GM clock offset scaled log variance, and the GM clock priority 2 in the dataset A is different from corresponding GM information in the dataset B, the NE 1 selects a clock source from the 1588 server 1 and the 1588 server 2 based on the any GM information in the dataset A and the corresponding GM information in the dataset B. For example, each of the GM clock identity, the GM clock priority 1, the GM clock class, the GM clock accuracy, the GM clock offset scaled log variance, the GM clock priority 2, and the quantity of hops is expressed by using a number or a character. That the two GM clock identities are the same may also be described as that the two GM clock identities are equal, that the two GM clock identities are different may also be described as that the two GM clock identities are not equal, that the two GM clock priorities are the same may also be described as that the two GM clock priorities are equal, that the two GM clock priorities are different may also be described as that the two GM clock priorities are not equal, and so on. When the NE 1 determines, through comparison, that the GM clock priority 1 in the dataset A is different from the GM clock priority 1 in the dataset B, the NE 1 determines a 1588 server corresponding to a smaller GM clock priority 1 in the GM clock priority 1 in the dataset A and the GM clock priority 1 in the dataset B as a clock source. The 1588 server corresponding to the smaller GM clock priority 1 is a source end of a 1588 message including the smaller GM clock priority 1. When the NE 1 determines, through comparison, that the GM clock priority 1 in the dataset A is the same as the GM clock priority 1 in the dataset B, the NE 1 compares the GM clock class in the dataset A with the GM clock class in the dataset B. When the NE 1 determines, through comparison, that the GM clock class in the dataset A is different from the GM clock class in the dataset B, the NE 1 determines a 1588 server corresponding to a smaller GM clock class in the GM clock class in the dataset A and the GM clock class in the dataset B as a clock source. The 1588 server corresponding to the smaller GM clock class is a source end of a 1588 message including the smaller GM clock class. When the NE 1 determines, through comparison, that the GM clock class in the dataset A is the same as the GM clock class in the dataset B, the NE 1 compares the GM clock accuracy in the dataset A with the GM clock accuracy in the dataset B. When the NE 1 determines, through comparison, that the GM clock accuracy in the dataset A is different from the GM clock accuracy in the dataset B, the NE 1 determines a 1588 server corresponding to smaller GM clock accuracy in the GM clock accuracy in the dataset A and the GM clock accuracy in the dataset B as a clock source. The 1588 server corresponding to the smaller GM clock accuracy is a source end of a 1588 message including the smaller GM clock accuracy. When the NE 1 determines, through comparison, that the GM clock accuracy in the dataset A is the same as the GM clock accuracy in the dataset B, the NE 1 compares the GM clock offset scaled log variance in the dataset A with the GM clock offset scaled log variance in the dataset B. When the NE 1 determines, through comparison, that the GM clock offset scaled log variance in the dataset A is different from the GM clock offset scaled log variance in the dataset B, the NE 1 determines a 1588 server corresponding to a smaller GM clock offset scaled log variance in the GM clock offset scaled log variance in the dataset A and the GM clock offset scaled log variance in the dataset B as a clock source. The 1588 server corresponding to the smaller GM clock offset scaled log variance is a source end of a 1588 message including the smaller GM clock offset scaled log variance. When the NE 1 determines, through comparison, that the GM clock offset scaled log variance in the dataset A is the same as the GM clock offset scaled log variance in the dataset B, the NE 1 compares the GM clock priority 2 in the dataset A with the GM clock priority 2 in the dataset B. When the NE 1 determines, through comparison, that the GM clock priority 2 in the dataset A is different from the GM clock priority 2 in the dataset B, the NE 1 determines a 1588 server corresponding to a smaller GM clock priority 2 in the GM clock priority 2 in the dataset A and the GM clock priority 2 in the dataset B as a clock source. The 1588 server corresponding to the smaller GM clock priority 2 is a source end of a 1588 message including the smaller GM clock priority 2. When the NE 1 determines, through comparison, that the GM clock priority 2 in the dataset A is the same as the GM clock priority 2 in the dataset B, the NE 1 compares the GM clock identity in the dataset A with the clock identity in the dataset B. It should be noted that only the BMC source selection algorithm defined in the IEEE 1588v2 standard is briefly described herein. For detailed content of the BMC source selection algorithm defined in the IEEE 1588v2 standard, refer to the IEEE 1588v2 standard. For details, refer to a dataset comparison algorithm part 1 and a dataset comparison algorithm part 2 defined in the IEEE 1588v2 standard (selection of a clock source according to the shortest path principle is mainly described in the part 2). An address of the IEEE 1588v2 standard is https://ieeexplore.ieee.org/document/7949184.

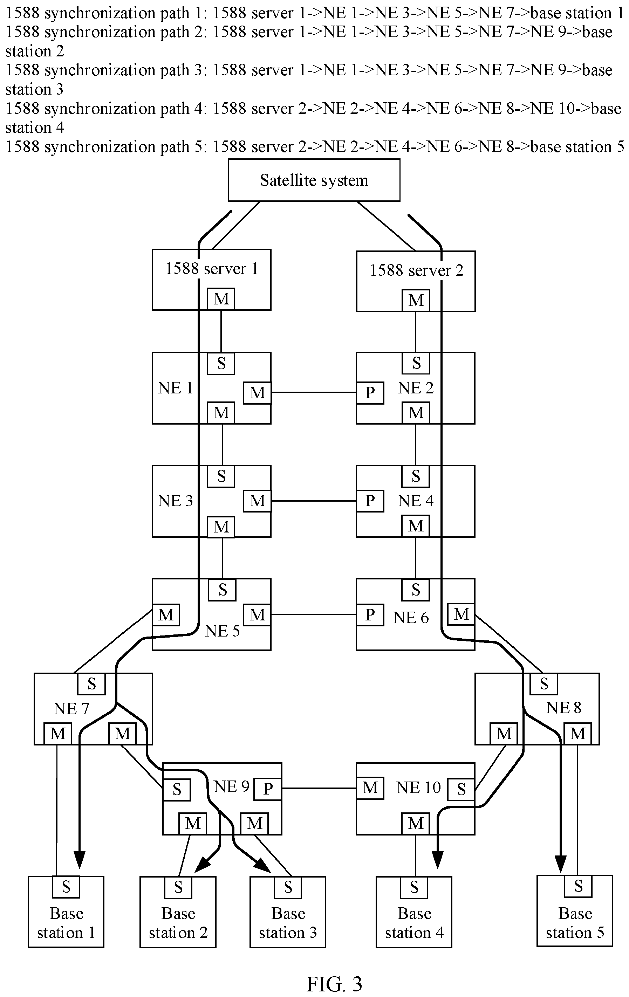

FIG. 3 is a diagram of another 1588 network including a 1588 synchronization path according to an embodiment of this application. The 1588 synchronization path in the 1588 network is a 1588 synchronization path determined based on the BMC source selection algorithm defined in the ITU-T G.8275.1 standard. The BMC source selection algorithm defined in the ITU-T G.8275.1 standard is described in FIG. 3. In FIG. 3, a small box in each device in NEs 1 to 10 and base stations 1 to 5 represents a port in the device, and a letter "M", "S", or "P" in the small box represents a 1588 status of the port represented by the small box ("M" represents an M state, "S" represents an S state, and "P" represents a P state). Meanings of small boxes in 1588 servers 1 and 2 and meanings of letters in the small boxes are the same. As shown in FIG. 3, each of the 1588 servers 1 and 2 is configured to: receive a satellite signal from a satellite system, synchronize with time of the satellite system based on the received satellite signal, and transmit a 1588 message to the base stations 1 to 5 through the NEs 1 to 10 based on the received satellite signal. Each device in the NEs 1 to 10 and the base stations 1 to 5 generates a dataset including clock source selection information based on a received 1588 message, performs clock source selection based on the clock source selection information in the dataset and the BMC source selection algorithm defined in the ITU-T G.8275.1 standard, and sets a 1588 status of a port in the device based on the 1588 message received by the device and a clock source selected by the device. The 1588 servers 1 and 2 also set 1588 statuses of respective ports. For example, each 1588 server in the 1588 servers 1 and 2 sets a 1588 status of a port for sending a 1588 message in the 1588 server to the M state; each NE in the NEs 1 to 10 sets a 1588 status of a port for receiving a 1588 message of a clock source selected by the NE in the NE to the S state, and sets a 1588 status of a port for sending the 1588 message of the clock source selected by the NE in the NE to the M state; and each base station in the base stations 1 to 5 sets a 1588 status of a port for receiving a 1588 message of a clock source selected by the base station in the base station to the S state. Finally, the 1588 statuses of the respective ports that are set by the 1588 servers 1 and 2, the NEs 1 to 10, and the base stations 1 to 5 are shown in FIG. 3. Based on the 1588 statuses of the ports in the 1588 servers 1 and 2, the NEs 1 to 10, and the base stations 1 to 5, 1588 synchronization paths respectively corresponding to the base stations 1 to 5 may be determined. The 1588 synchronization path corresponding to each base station in the base stations 1 to 5 is a transmission path of a 1588 message of a clock source selected by the base station from the clock source to the base station. For example, the base station 1 corresponds to a 1588 synchronization path 1, and the 1588 synchronization path 1 is a transmission path of a 1588 message of a clock source (the 1588 server 1) selected by the base station 1 from the 1588 server 1 to the base station 1; a base station 2 corresponds to a 1588 synchronization path 2, and the 1588 synchronization path 2 is a transmission path of a 1588 message of a clock source (the 1588 server 1) selected by the base station 2 from the 1588 server 1 to the base station 2; a base station 3 corresponds to a 1588 synchronization path 3, and the 1588 synchronization path 3 is a transmission path of a 1588 message of a clock source (the 1588 server 1) selected by the base station 3 from the 1588 server 1 to the base station 3; a base station 4 corresponds to a 1588 synchronization path 4, and the 1588 synchronization path 4 is a transmission path of a 1588 message of a clock source (the 1588 server 2) selected by the base station 4 from the 1588 server 2 to the base station 4; and the base station 5 corresponds to a 1588 synchronization path 5, and the 1588 synchronization path 5 is a transmission path of a 1588 message of a clock source (the 1588 server 2) selected by the base station 5 from the 1588 server 2 to the base station 5. Based on FIG. 3, it may be learned that clock sources selected by the NE 1, an NE 3, an NE 5, an NE 7, an NE 9, and base stations 1 to 3 are all the 1588 server 1, and all of the NE 1, the NE 3, the NE 5, the NE 7, the NE 9, and the base stations 1 to 3 track the 1588 server 1 to perform time synchronization with the 1588 server 1; and clock sources selected by an NE 2, an NE 4, an NE 6, an NE 8, the NE 10, and base stations 4 and 5 are all the 1588 server 2, and all of the NE 2, the NE 4, the NE 6, the NE 8, the NE 10, and the base stations 4 and 5 track the 1588 server 2 to perform time synchronization with the 1588 server 2. That is, all of the NEs 1 to 10 and the base stations 1 to 5 select 1588 servers closest to the devices as clock sources for time synchronization.

With reference to FIG. 3, for example, each of 1588 messages sent by the 1588 servers 1 and 2 carries GM information and a quantity of hops, the quantity of hops carried in the 1588 message is increased hop by hop, and all or a part of the GM information carried in the 1588 message is updated hop by hop. For example, for any device in the NEs 1 to 10 and the base stations 1 to 5, the device receives a 1588 message A and a 1588 message B. The device generates a dataset A based on the 1588 message A, and the device generates a dataset B based on the 1588 message B. Each of the dataset A and the dataset B includes clock source selection information. The device performs clock source selection based on clock source selection information in the dataset A, clock source selection information in the dataset B, and the BMC source selection algorithm defined in the ITU-T G.8275.1 standard, and the device sets a 1588 status of a port in the device based on a selected clock source. For example, the device is the NE 1, and an example in which the 1588 message A originates from the 1588 server 1, the 1588 message B originates from the 1588 server 2, and each of the dataset A and the dataset B includes a GM clock identity, a local priority, a GM clock class, GM clock accuracy, a GM clock offset scaled log variance, a GM clock priority 2, and a quantity of hops is used for description. A quantity of hops in the dataset A is a quantity of hops through which the 1588 message A passes to reach the NE 1. A quantity of hops in the dataset B is a quantity of hops through which the 1588 message B passes to reach the NE 1. A local priority in the dataset A is a priority of a port for receiving the 1588 messages A in the NE 1. A local priority in the dataset B is a priority of a port for receiving the 1588 messages B in the NE1. The NE 1 performs clock source selection by comparing the dataset A with the dataset B based on the BMC source selection algorithm defined in the ITU-T G.8275.1 standard. Specifically, the NE 1 sequentially compares a GM clock class in the dataset A with a GM clock class in the dataset B, GM clock accuracy in the dataset A with GM clock accuracy in the dataset B, a GM clock offset scaled log variance in the dataset A with a GM clock offset scaled log variance in the dataset B, a GM clock priority 2 in the dataset A with a GM clock priority 2 in the dataset B, and the local priority in the dataset A with the local priority in the dataset B. When the NE 1 determines, through comparison, that the GM clock class in the dataset A is the same as the GM clock class in the dataset B, the GM clock accuracy in the dataset A is the same as the GM clock accuracy in the dataset B, the GM clock offset scaled log variance in the dataset A is the same as the GM clock offset scaled log variance included in the dataset B, the GM clock priority 2 in the dataset A is the same as the GM clock priority 2 in the dataset B, and the local priority in the dataset A is the same as the local priority in the dataset B, the NE 1 determines whether the GM clock class in the dataset A is less than or equal to (that is, ≤) 127. When the GM clock class in the dataset A is less than or equal to (that is, ≤) 127, the NE 1 selects a clock source based on the quantity of hops in the dataset A and the quantity of hops in the dataset B according to a shortest path principle. When the GM clock class in the dataset A is greater than (that is, >) 127, the NE 1 compares the GM clock identity in the dataset A with the GM clock identity in the dataset B. When the GM clock identity in the dataset A is the same as the GM clock identity in the dataset B, it indicates that the 1588 message A and the 1588 message B originate from a same 1588 server, and the NE 1 selects a clock source based on the quantity of hops in the dataset A and the quantity of hops in the dataset B according to the shortest path principle. When the GM clock identity in the dataset A is different from the GM clock identity in the dataset B, the NE 1 determines a 1588 server identified by a smallest clock identity in the GM clock identity in the dataset A and the clock identity in the dataset B as a clock source. When the NE 1 determines, through comparison, that any GM information in the GM clock class, the GM clock accuracy, the GM clock offset scaled log variance, the GM clock priority 2, and the local priority in the dataset A is different from corresponding GM information in the dataset B, the NE 1 selects a clock source from the 1588 server 1 and the 1588 server 2 based on the any GM information in the dataset A and the corresponding GM information in the dataset B. For example, when the NE 1 determines, through comparison, that the GM clock class in the dataset A is different from the GM clock class in the dataset B, the NE 1 determines a 1588 server corresponding to a smaller GM clock class in the GM clock class in the dataset A and the GM clock class in the dataset B as a clock source. The 1588 server corresponding to the smaller GM clock class is a source end of a 1588 message including the smaller GM clock class. When the NE 1 determines, through comparison, that the GM clock class in the dataset A is the same as the GM clock class in the dataset B, the NE 1 compares the GM clock accuracy in the dataset A with the GM clock accuracy in the dataset B. When the NE 1 determines, through comparison, that the GM clock accuracy in the dataset A is different from the GM clock accuracy in the dataset B, the NE 1 determines a 1588 server corresponding to smaller GM clock accuracy in the GM clock accuracy in the dataset A and the GM clock accuracy in the dataset B as a clock source. The 1588 server corresponding to the smaller GM clock accuracy is a source end of a 1588 message including the smaller GM clock accuracy. When the NE 1 determines, through comparison, that the GM clock accuracy in the dataset A is the same as the GM clock accuracy in the dataset B, the NE 1 compares the GM clock offset scaled log variance in the dataset A with the GM clock offset scaled log variance in the dataset B. When the NE 1 determines, through comparison, that the GM clock offset scaled log variance in the dataset A is different from the GM clock offset scaled log variance in the dataset B, the NE 1 determines a 1588 server corresponding to a smaller GM clock offset scaled log variance in the GM clock offset scaled log variance in the dataset A and the GM clock offset scaled log variance in the dataset B as a clock source. The 1588 server corresponding to the smaller GM clock offset scaled log variance is a source end of a 1588 message including the smaller GM clock offset scaled log variance. When the NE 1 determines, through comparison, that the GM clock offset scaled log variance in the dataset A is the same as the GM clock offset scaled log variance in the dataset B, the NE 1 compares the GM clock priority 2 in the dataset A with the GM clock priority 2 in the dataset B. When the NE 1 determines, through comparison, that the GM clock priority 2 in the dataset A is different from the GM clock priority 2 in the dataset B, the NE 1 determines a 1588 server corresponding to a smaller GM clock priority 2 in the GM clock priority 2 in the dataset A and the GM clock priority 2 in the dataset B as a clock source. The 1588 server corresponding to the smaller GM clock priority 2 is a source end of a 1588 message including the smaller GM clock priority 2. When the NE 1 determines, through comparison, that the GM clock priority 2 in the dataset A is the same as the GM clock priority 2 in the dataset B, the NE 1 compares the local priority in the dataset A with the local priority in the dataset B. When the NE 1 determines, through comparison, that the local priority in the dataset A is different from the local priority in the dataset B, the NE 1 determines a 1588 server corresponding to a smaller local priority in the local priority in the dataset A and the local priority in the dataset B as a clock source. The 1588 server corresponding to the smaller local priority is a source end of a target 1588 message in the 1588 message A and the 1588 message B, and the target 1588 message is received by the NE 1 through a port with the smaller local priority. When the NE 1 determines, through comparison, that the local priority in the dataset A is the same as the local priority in the dataset B, the NE 1 determines whether the GM clock class in the dataset A is less than or equal to (that is, ≤) 127. It should be noted that only the BMC source selection algorithm defined in the ITU-T G.8275.1 standard is briefly described herein. For detailed content of the BMC source selection algorithm defined in the ITU-T G.8275.1 standard, refer to the ITU-T G.8275.1 standard. For details, refer to a dataset comparison algorithm part 1 and a dataset comparison algorithm part 2 defined in the ITU-T G.8275.1 standard (a process of selecting a clock source according to the shortest path principle is mainly described in the part 2, and the dataset comparison algorithm part 2 in the ITU-T G.8275.1 standard is the same as the dataset comparison algorithm part 2 in the IEEE 1588v2 standard). An address of the ITU-T G.8275.1 standard is https://www.itu.int/ITU-T/recommendations/rec.aspx?rec=15131. It should be noted that when the satellite signal is normal, a GM clock class of the 1588 server 1 is the same as a GM clock class of the 1588 server 2, GM clock accuracy of the 1588 server 1 is the same as GM clock accuracy of the 1588 server 2, and a GM clock offset scaled log variance of the 1588 server 1 is the same as a GM clock offset scaled log variance of the 1588 server 2. A GM clock priority 2 of the 1588 server 1 and a GM clock priority 2 of the 1588 server 2 may be configured to be the same, and both the GM clock class of the 1588 server 1 and the GM clock class of the 1588 server 2 are 6. In addition, a priority of a port for receiving the 1588 message A in the NE 1 and a priority of a port for receiving the 1588 message B in the NE 1 may be configured to be the same. For example, both the priority of the port for receiving the 1588 message A in the NE 1 and the priority of the port for receiving the 1588 message B in the NE 1 are configured to be 128. Therefore, the GM clock class in the dataset A is the same as the GM clock class in the dataset B, the GM clock accuracy in the dataset A is the same as the GM clock accuracy in the dataset B, the GM clock offset scaled log variance in the dataset A is the same as the GM clock offset scaled log variance included in the dataset B, the GM clock priority 2 in the dataset A is the same as the GM clock priority 2 in the dataset B, the local priority in the dataset A is the same as the local priority in the dataset B, and the GM clock class in the dataset A is 6. The 1588 message A originates from the 1588 server 1, the dataset A corresponds to the 1588 server 1, the 1588 message B originates from the 1588 server 2, and the dataset B corresponds to the 1588 server 2. The NE 1 selects a clock source for tracking based on the quantity of hops in the dataset A and the quantity of hops in the dataset B according to the shortest path principle. In this way, time synchronization accuracy is improved. The 1588 synchronization path shown in FIG. 3 is a 1588 synchronization path determined based on the 1588 statuses of the respective ports that are set by the 1588 servers 1 and 2, the NEs 1 to 10, and the base stations 1 to 5 when the satellite signal is normal.

The GM clock class is a clock class of the 1588 server. The GM clock class is also referred to as a telecom grandmaster (telecom grandmaster, T-GM) clock class. GM clock classes in various scenarios are defined in the ITU-T G.8275.1 standard. The GM clock classes defined in the ITU-T G.8275.1 standard include 6, 7, 140, 150, and 160. Meanings of these clock classes are shown in Table 1 below.

**Table 1**

| GM clock class | Meaning |
|---|---|
| 6 | A GM normally tracks a time signal (for example, a satellite signal) |
| 7 | A GM is in a holdover mode and performance is available |
| 140 | A GM is in a holdover mode and performance is unavailable, but depends on a category-1 frequency to provide time holdover |
| 150 | A GM is in a holdover mode and performance is unavailable, but depends on a category-2 frequency to provide time holdover |
| 160 | A GM is in a holdover mode and performance is unavailable, but depends on a category-3 frequency to provide time holdover |

Only several GM clock classes and meanings of the GM clock classes are listed as examples in Table 1. For detailed descriptions of the GM clock classes and the meanings of the GM clock classes, refer to the ITU-T G.8275.1 standard. Details are not described herein again in this embodiment of this application.

Based on the descriptions of the BMC source selection algorithm defined in the ITU-T G.8275.1 standard, it may be learned that the GM clock class of the 1588 server 1 is the same as the GM clock class of the 1588 server 2, the GM clock accuracy of the 1588 server 1 is the same as the GM clock accuracy of the 1588 server 2, the GM clock offset scaled log variance of the 1588 server 1 is the same as the GM clock offset scaled log variance of the 1588 server 2, and the GM clock priority 2 of the 1588 server 1 is the same as the GM clock priority 2 of the 1588 server 2. When the priority of the port for receiving the 1588 message A in the device is the same as the priority of the port for receiving the 1588 message B in the NE 1, if both the GM clock class of the 1588 server 1 and the GM clock class of the 1588 server 2 are 7 (the GM clock class is less than 127), based on the BMC source selection algorithm defined in the ITU-T G.8275.1 standard, all devices select 1588 servers closest to the devices as clock sources for tracking according to the shortest path principle. In this way, some devices select the 1588 server 1 as clock sources for tracking, and the other devices select the 1588 server 2 as clock sources for tracking. However, when both the GM clock class of the 1588 server 1 and the GM clock class of the 1588 server 2 are 7, both the 1588 server 1 and the 1588 server 2 are in the time holdover mode. As time goes by, a time deviation between the 1588 server 1 and the 1588 server 2 is increasingly large, resulting in an increasingly large time deviation between the device tracking the 1588 server 1 and the device tracking the 1588 server 2. Although time synchronization accuracy of devices tracking different 1588 servers can meet the requirement of 3 µs, the time synchronization accuracy is not optimal. In addition, a clock class threshold (namely, 127) in the BMC source selection algorithm defined in the ITU-T G.8275.1 standard is fixed and cannot be configured. Consequently, flexibility of the BMC source selection algorithm defined in the G.8275.1 standard is low and a device cannot flexibly select a clock source.

Embodiments of this application provide a clock source selection method and apparatus, and a communication system. In the clock source selection method, a clock class threshold is configurable. When a clock class in a dataset is not superior to the clock class threshold, a device determines a clock source based on a clock identity. Therefore, when the clock class is not superior to the clock class threshold (for example, the clock class is greater than 6), clock sources determined by different devices may be a same grandmaster clock source, and different devices may track a same grandmaster clock source. This reduces a difference in time synchronization accuracy between different devices, and improves the time synchronization accuracy. In addition, the clock class threshold is configurable. Therefore, flexibility of determining, by the device, the clock source based on the flexibly configured clock class threshold is high, and it can be ensured that the clock class threshold is compatible with the current G.8275.1 standard and the ITU-T G.8275.2 standard. In embodiments of this application, it can be ensured that a time deviation between different devices (for example, base stations) is maintained within a required range (for example, ±1.5 µs), and it can be ensured that a 5G service can work normally.

The following describes the technical solutions provided in embodiments of this application. An application scenario of embodiments of this application is first described.

An application scenario of embodiments of this application provides a communication network. The communication network includes at least one device and at least two clock servers. Each of the at least two clock servers is configured to: receive a satellite signal from a satellite system, perform time synchronization with the satellite system based on the received satellite signal, and send a clock message carrying time information based on the received satellite signal. Each device in the at least one device is configured to: perform clock source selection based on a received clock message (that is, determine a clock source in the at least two clock servers), and perform time synchronization with the clock source, for example, adjust time of the device based on time information carried in the clock message originating from the clock source, to perform time synchronization with the clock source. Optionally, each device in the at least one device generates a dataset (dataset) including clock source selection information based on the received clock message, and performs clock source selection based on the clock source selection information in the dataset. In an embodiment, the at least one device is a plurality of devices, and the plurality of devices include at least one network device and at least one base station. Each of the at least two clock servers is connected to the at least one base station through the at least one network device, and time information carried in a clock message sent by each clock server in the at least two clock servers is time information of the clock server. For example, each of the at least two clock servers is a 1588 server, each of clock messages sent by the at least two clock servers is a 1588 message, and the time information carried in the clock message is GM information.

Optionally, each device in the at least one device further sets a 1588 status of a port in the device based on the clock message (for example, a 1588 message) received by the device and a clock source selected by the device, and the at least two clock servers also set 1588 statuses of respective ports, so that a 1588 synchronization path in the communication network can be determined based on the 1588 statuses of the ports that are set by the at least two clock servers and the 1588 status of the port that is set by the at least one device. In an example, the communication network provided in the application scenario of embodiments of this application is the 1588 network shown in FIG. 1, and embodiments of this application may be applied to the 1588 network shown in FIG. 1. In this case, the 1588 network shown in FIG. 1 is merely used as an example of the application scenario of embodiments of this application, and is not used to limit the technical solutions in embodiments of this application. In an implementation process, a quantity of NEs, a quantity of base stations, and a relationship between devices such as the NE and the base station in the 1588 network may be configured as required. In addition, the 1588 network may further include another device, for example, include a control device for performing network control. The control device integrates functions such as network management, service control, and network analysis. The control device may be a server, a server cluster including several servers, or a cloud computing service center. In some embodiments, the control device is also referred to as a management device, a network management device, a controller, or the like. This is not limited in embodiments of this application.

It should be noted that in the descriptions of this application, a clock server closer to a device is a clock server with a shorter path to the device in the at least two clock servers, and is not a clock server at a physical location closer to that of the device. For example, if both a clock server 1 and a clock server 2 send a clock message to the communication network, a clock server closer to a device A in the communication network is a clock server with a shorter path to the device A in the clock server 1 and the clock server 2, and is not a clock server at a physical location closer to that of the device A. For example, a physical location of the device A is closer to a physical location of the clock server 1, and the physical location of the device A is farther away from a physical location of the clock server 2. However, a large quantity of devices are connected between the device A and the clock server 1, and a small quantity of devices are connected between the device A and the clock server 2. In this case, the clock server 2 is the clock server closer to the device A in embodiments of this application, and the clock server 1 is not the clock server closer to the device A in embodiments of this application. Similarly, a clock server closest to a device is a clock server with a shortest path to the device in the at least two clock servers, and is not a clock server at a physical location closest to that of the device. For example, if both a clock server 1 and a clock server 2 send a clock message to the communication network, a clock server closest to a device A in the communication network is a clock server with a shortest path to the device A in the clock server 1 and the clock server 2, and is not a clock server at a physical location closest to that of the device A. For example, a physical location of the device A is closest to a physical location of the clock server 1, and the physical location of the device A is farther away from a physical location of the clock server 2. However, a large quantity of devices are connected between the device A and the clock server 1, and a small quantity of devices are connected between the device A and the clock server 2. In this case, the clock server 2 is the clock server closest to the device A in embodiments of this application, and the clock server 1 is not the clock server closest to the device A in embodiments of this application. In an example, the communication network is the 1588 network shown in FIG. 1, the clock server 1 is the 1588 server 1, the clock server 2 is the 1588 server 2, the device A is any device in the NEs 1 to 10 and the base stations 1 to 5, the clock message is a 1588 message, the 1588 server closer to the device A is a clock server with a shorter path to the device A in the 1588 server 1 and the 1588 server 2, and the 1588 server closest to the device A is a clock server with a shorter path to the device A in the 1588 server 1 and the 1588 server 2.

The foregoing describes the application scenario of embodiments of this application. The following describes an embodiment of the clock source selection method in this application.

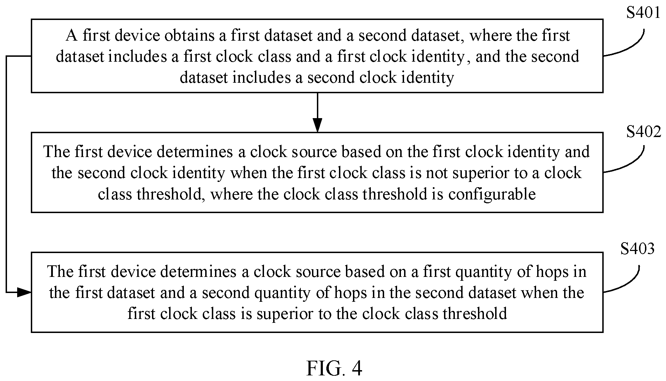

FIG. 4 is a flowchart of a clock source selection method according to an embodiment of this application. In this embodiment, an example in which the clock source selection method is applied to a first device is used for description, and the clock source selection method is performed by the first device. The first device is any network device or base station in a communication network, and a clock server in the following descriptions is deployed in the communication network. For example, the communication network is the 1588 network shown in FIG. 1, the first device is any NE in the NEs 1 to 10 or any base station in the base stations 1 to 5, and the clock server in the following descriptions includes at least one of the 1588 server 1 and the 1588 server 2. As shown in FIG. 4, the clock source selection method includes the following steps S401 and S402.

S401: The first device obtains a first dataset and a second dataset, where the first dataset includes a first clock class and a first clock identity, and the second dataset includes a second clock identity.

Each of the first clock identity and the second clock identity is used to identify a clock server, and the first clock identity may be the same as or different from the second clock identity, so that a clock server identified by the first clock identity and a clock server identified by the second clock identity are a same clock server or different clock servers. Specifically, when the first clock identity is the same as the second clock identity, the clock server identified by the first clock identity and the clock server identified by the second clock identity are a same clock server; or when the first clock identity is different from the second clock identity, the clock server identified by the first clock identity and the clock server identified by the second clock identity are not a same clock server. For ease of description, the clock server identified by the first clock identity is referred to as a first clock server, and the clock server identified by the second clock identity is referred to as a second clock server. Therefore, the first clock server and the second clock server are a same clock server or different clock servers.

The first clock class is a clock class of the clock server (namely, the first clock server) identified by the first clock identity, namely, a clock class of the first clock server. Optionally, the second dataset further includes a second clock class, and the second clock class is a clock class of the clock server (namely, the second clock server) identified by the second clock identity. The first clock class may be the same as or different from the second clock class. In an example, the clock server identified by the first clock identity and the clock server identified by the second clock identity are a same clock server, and the first clock class is the same as the second clock class. In another example, the clock server identified by the first clock identity and the clock server identified by the second clock identity are not a same clock server, and the first clock class is the same as or different from the second clock class.

In an optional embodiment, the first device receives a first clock message and a second clock message, the first device generates the first dataset based on the first clock message, and the first device generates the second dataset based on the second clock message. In an embodiment, the first clock message originates from the first clock server, the second clock message originates from the second clock server, the first clock message carries the first clock class and the first clock identity, and the second clock message carries the second clock class and the second clock identity. The first device extracts the first clock class and the first clock identity from the first clock message, and the first device generates the first dataset based on the first clock class and the first clock identity. The first device extracts the second clock class and the second clock identity from the second clock message, and the first device generates the second dataset based on the second clock class and the second clock identity. In an embodiment, each of the first clock message and the second clock message carries GM information, GM information carried in the first clock message is GM information of the first clock server, the GM information carried in the first clock message includes the first clock class and the first clock identity, GM information carried in the second clock message is GM information of the second clock server, and the GM information carried in the second clock message includes the second clock class and the second clock identity. The first device extracts the GM information from the first clock message, and the first device generates the first dataset based on the GM information extracted from the first clock message. The first device extracts the GM information from the second clock message, and the first device generates the second dataset based on the GM information extracted from the second clock message.

In an optional embodiment, the first dataset further includes at least one of the following: first clock accuracy, a first clock offset scaled log variance, a first clock priority, a first local priority, and a first quantity of hops. The first clock accuracy is clock accuracy of the first clock server, the first clock offset scaled log variance is a clock offset scaled log variance of the first clock server, the first clock priority is a clock priority of the first clock server, the first local priority is a priority of a port (for example, a first port) for receiving the first clock message in the first device, the first device receives the first clock message through the first port, and the first quantity of hops is a quantity of hops through which the first clock message passes from the first clock server to the first device. For example, the GM information carried in the first clock message includes the first clock class, the first clock identity, the first clock accuracy, the first clock offset scaled log variance, and the first clock priority, and the first clock message further carries the first quantity of hops. The first device determines the priority (namely, the first local priority) of the first port in the first device, the first device extracts the GM information and the first quantity of hops from the first clock message, and the first device generates the first dataset based on the first local priority, the GM information extracted from the first clock message, and the first quantity of hops extracted from the first clock message.

In an optional embodiment, the second dataset further includes at least one of the following: second clock accuracy, a second clock offset scaled log variance, a second clock priority, a second local priority, and a second quantity of hops. The second clock accuracy is clock accuracy of the second clock server, the second clock offset scaled log variance is a clock offset scaled log variance of the second clock server, the second clock priority is a clock priority of the second clock server, the second local priority is a priority of a port (for example, a second port) for receiving the second clock message in the first device, the first device receives the second clock message through the second port, and the second quantity of hops is a quantity of hops through which the second clock message passes from the second clock server to the first device. For example, the GM information carried in the second clock message includes the second clock class, the second clock identity, the second clock accuracy, the second clock offset scaled log variance, and the second clock priority, and the second clock message further carries the second quantity of hops. The first device determines the priority (namely, the second local priority) of the second port in the first device, the first device extracts the GM information and the second quantity of hops from the second clock message, and the first device generates the second dataset based on the second local priority, the GM information extracted from the second clock message, and the second quantity of hops extracted from the second clock message.

In an optional embodiment, both the first clock server and the second clock server are 1588 servers, and both the first clock message and the second clock message are 1588 messages. The first clock class is a GM clock class (GM clock class) of the first clock server, the first clock identity is a GM clock identity (GM clock identity) of the first clock server, the first clock accuracy is GM clock accuracy (GM clock accuracy) of the first clock server, the first clock offset scaled log variance is a GM clock offset scaled log variance (GM clock offset scaled log variance) of the first clock server, and the first clock priority is a GM clock priority 2 (GM clock priority2) of the first clock server. The second clock class is a GM clock class of the second clock server, the second clock identity is a GM clock identity of the second clock server, the second clock accuracy is GM clock accuracy of the second clock server, the second clock offset scaled log variance is a GM clock offset scaled log variance of the second clock server, and the second clock priority is GM clock priority2 of the second clock server. The GM clock class, the GM clock identity, the GM clock accuracy, the GM clock offset scaled log variance, and GM clock priority2 are described in the ITU-T G.8275.1 standard and the ITU-T G.8275.2 standard. In the IEEE 1588v2 standard, the GM clock class is briefly referred to as a GM class, the GM clock identity is briefly referred to as a GM identity, GM clock priority2 is briefly referred to as GM priority2, the GM clock accuracy is briefly referred to as GM accuracy, and the GM clock offset scaled log variance is briefly referred to as GM offsetscaledlogvariance. This is not limited in this application.

After the first device obtains the first dataset and the second dataset, the first device performs clock source selection based on the first dataset and the second dataset, that is, determines (or is referred to as "selects") a clock source. In a specific embodiment, the first device performs clock source selection based on clock source selection information in the first dataset and clock source selection information in the second dataset. Both the GM information and the first local priority in the first dataset are clock source selection information in the first dataset, and both the GM information and the second local priority in the second dataset are clock source selection information in the second dataset. For an implementation process in which the first device performs clock source selection based on the first dataset and the second dataset, refer to the following related descriptions.

S402: The first device determines a clock source based on the first clock identity and the second clock identity when the first clock class is not superior to a clock class threshold, where the clock class threshold is configurable.

The first device determines whether the first clock class in the first dataset is superior to the clock class threshold. When determining that the first clock class is not superior to the clock class threshold, the first device determines the clock source based on the first clock identity in the first dataset and the second clock identity in the second dataset. In this embodiment of this application, that the first clock class is not superior to the clock class threshold includes any one of the following three cases.

**Case 1:** That the first clock class is not superior to the clock class threshold includes that the first clock class is greater than the clock class threshold.

The clock class threshold is a clock class indicating that a clock device is in a mode of normal time signal tracking. For example, the clock class threshold is 6, and that the first clock class is not superior to the clock class threshold is that the first clock class is greater than the clock class threshold. In a specific embodiment, the first device determines whether the first clock class is greater than the clock class threshold (for example, 6). When determining that the first clock class is greater than the clock class threshold, the first device determines that the first clock class is not superior to the clock class threshold.

**Case 2:** That the first clock class is not superior to the clock class threshold includes that the first clock class is greater than or equal to the clock class threshold.

The clock class threshold is a clock class indicating that a clock device loses a time signal and the clock device is in a mode of being available in holdover time. For example, the clock class threshold is 7, and that the first clock class is not superior to the clock class threshold is that the first clock class is greater than or equal to (that is, ≥) the clock class threshold, that is, the first clock class is not less than the clock class threshold. In a specific embodiment, the first device determines whether the first clock class is less than the clock class threshold (for example, 7). When determining that the first clock class is not less than (that is, greater than or equal to) the clock class threshold (for example, 7), the first device determines that the first clock class is not superior to the clock class threshold (for example, 7).

**Case 3:** That the first clock class is not superior to the clock class threshold includes that the first clock class is not in a clock class set.

The clock class threshold is in the clock class set. A clock class in the clock class set includes a clock class (for example, 6) indicating that a clock device is in a mode of normal time signal tracking, and/or a clock class (for example, 7) indicating that a clock device loses a time signal and the clock device is in a mode of being available in holdover time, and/or a default clock class (for example, 127). For example, the clock class set is any one of the following: {6}, {7}, {127}, {6, 127}, {7, 127}, {6, 7}, and {6, 7, 127}.

In a specific embodiment, the first device determines whether the first clock class is in the clock class set. When determining that the first clock class is not in the clock class set, the first device determines that the first clock class is not superior to the clock class threshold.

In the foregoing three cases, the time signal may be a satellite signal, the clock device is a clock server or a device that is connected between the first device and the clock server and that has a clock function, and the clock device is on a clock synchronization path (for example, a 1588 synchronization path). For example, the clock device is a previous-hop device of the first device, and the clock device is on the clock synchronization path (for example, the 1588 synchronization path).

In an optional embodiment, an attribute set defaultDS of the first device includes at least one of a defaultDS.clockClassSet field and a defaultDS.clockClassThreshold field, the defaultDS.clockClassSet field is used to record the clock class set, and the defaultDS.clockClassThreshold field is used to record the clock class threshold.

In this embodiment of this application, the clock source determined by the first device based on the first clock identity and the second clock identity may be a grandmaster clock source, or may be a master clock source. The grandmaster clock source is a clock server. The master clock source is located between the clock server and the first device, and the master clock source is on the clock synchronization path (for example, the 1588 synchronization path). For example, the master clock source is a previous-hop device of the first device, and the master clock source is on the clock synchronization path (for example, the 1588 synchronization path). The master clock source is a previous-hop tracking source device of the first device. In an optional embodiment, when the first device determines that the first clock class is not superior to the clock class threshold, the first device determines whether the first clock identity is the same as the second clock identity. When the first device determines that the first clock identity is the same as the second clock identity, the first device determines that the clock server (namely, the first clock server) identified by the first clock identity and the clock server (namely, the second clock server) identified by the second clock identity are a same clock server. Then, the first device determines that the first clock message and the second clock message originate from the same clock server, and the first device determines the clock source according to a shortest path principle. In this case, the clock source determined by the first device may be a master clock source. For example, the first device determines a clock synchronization path from the first device to the clock server according to the shortest path principle. For example, the first device determines the clock synchronization path from the first device to the clock server based on the first quantity of hops in the first dataset and the second quantity of hops in the second dataset according to the shortest path principle, and the first device determines the clock source (namely, the master clock source) based on the clock synchronization path. In an example, the first quantity of hops is a quantity of hops through which the first clock message passes from the first clock server to the first device, and the second quantity of hops is a quantity of hops through which the second clock message passes from the second clock server to the first device. The first device determines a smallest quantity of hops in the first quantity of hops and the second quantity of hops, the first device determines a transmission path of a clock message corresponding to the smallest quantity of hops as the clock synchronization path, and the first device determines a previous-hop device of the first device on the clock synchronization path as the clock source. When the previous-hop device is a clock server, the clock source is a master clock source, and the clock source is also a grandmaster clock source. Further, the first device adjusts time of the first device based on time information carried in the clock message corresponding to the smallest quantity of hops, to perform time synchronization with the clock source. When the first device determines that the first clock identity is different from the second clock identity, the first device determines that the clock server identified by the first clock identity and the clock server identified by the second clock identity are not a same clock server, and then determines that the first clock message and the second clock message originate from different clock servers. The first device determines a target clock identity in the first clock identity and the second clock identity, and the first device determines a clock server identified by the target clock identity as the clock source. In this case, the clock source determined by the first device is a grandmaster clock source. For example, each of the first clock identity and the second clock identity is expressed by using a value or a character. The target clock identity is a smallest clock identity in the first clock identity and the second clock identity. That the first clock identity is the same as the second clock identity may also be described as that the first clock identity is equal to the second clock identity, and that the first clock identity is different from the second clock identity may also be described as that the first clock identity is not equal to the second clock identity. This is not limited in this embodiment of this application.

In a specific embodiment, when the first device determines that the first clock class is not superior to the clock class threshold, the first device compares the first clock identity with the second clock identity. The first device may determine a value relationship between the first clock identity and the second clock identity through comparison. The value relationship between the first clock identity and the second clock identity includes that the first clock identity is equal to (that is, the same as) the second clock identity, the first clock identity is greater than the second clock identity, or the first clock identity is less than the second clock identity. When determining that the first clock identity is equal to (that is, the same as) the second clock identity, the first device determines the clock source according to the shortest path principle. The clock source determined by the first device may be a master clock source. When the first device determines that the first clock identity is greater than the second clock identity, the first device determines that the second clock identity is the smallest clock identity in the first clock identity and the second clock identity. Therefore, the first device determines that the second clock identity is the target clock identity, and the first device determines the clock server (namely, the second clock server) identified by the second clock identity as the clock source. The clock source determined by the first device may be a grandmaster clock source. When the first device determines that the first clock identity is less than the second clock identity, the first device determines that the first clock identity is the smallest clock identity in the first clock identity and the second clock identity. Therefore, the first device determines that the first clock identity is the target clock identity, and the first device determines the clock server (namely, the first clock server) identified by the first clock identity as the clock source. The clock source determined by the first device may be a grandmaster clock source.

In an optional embodiment, after the first device obtains the first dataset and the second dataset, the first device determines whether the first dataset and the second dataset meet a preset condition. When determining that the first dataset and the second dataset meet the preset condition, the first device determines whether the first clock class in the first dataset is superior to the clock class threshold. In an embodiment, the first dataset includes the first clock class and the first clock identity, and further includes at least one of the first clock accuracy, the first clock offset scaled log variance, the first clock priority, the first local priority, and the first quantity of hops. The second dataset includes the second clock class and the second clock identity, and further includes at least one of the second clock accuracy, the second clock offset scaled log variance, the second clock priority, the second local priority, and the second quantity of hops. Each of the first clock class, the first clock identity, the first clock accuracy, the first clock offset scaled log variance, the first clock priority, the first local priority, the first quantity of hops, the second clock class, the second clock identity, the second clock accuracy, the second clock offset scaled log variance, the second clock priority, the second local priority, and the second quantity of hops is expressed by using a value. The preset condition includes at least one of the following: The first clock class is equal to the second clock class, the first clock accuracy is equal to the second clock accuracy, the first clock offset scaled log variance is equal to the second clock offset scaled log variance, the first clock priority is equal to the second clock priority, and the first local priority is equal to the second local priority. Specifically, the first dataset includes the first clock class, the first clock identity, the first clock accuracy, the first clock offset scaled log variance, the first clock priority, and the first local priority; and the second dataset includes the second clock class, the second clock identity, the second clock accuracy, the second clock offset scaled log variance, the second clock priority, and the second local priority. The preset condition includes: The first clock class is equal to the second clock class, the first clock accuracy is equal to the second clock accuracy, the first clock offset scaled log variance is equal to the second clock offset scaled log variance, the first clock priority is equal to the second clock priority, and the first local priority is equal to the second local priority. That is, when the first clock class is equal to the second clock class, the first clock accuracy is equal to the second clock accuracy, the first clock offset scaled log variance is equal to the second clock offset scaled log variance, the first clock priority is equal to the second clock priority, and the first local priority is equal to the second local priority, the first device determines whether the first clock class in the first dataset is superior to the clock class threshold.

Optionally, the first dataset includes the first quantity of hops, the second dataset includes the second quantity of hops, and the clock source selection method further includes the following step S403.

S403: The first device determines a clock source based on the first quantity of hops in the first dataset and the second quantity of hops in the second dataset when the first clock class is superior to the clock class threshold.

The first device determines whether the first clock class in the first dataset is superior to the clock class threshold. When determining that the first clock class is superior to the clock class threshold, the first device determines the clock source based on the first quantity of hops in the first dataset and the second quantity of hops in the second dataset. In this embodiment of this application, that the first clock class is superior to the clock class threshold includes any one of the following three cases.

**Case 1 (corresponding to the case 1 in which the first clock class is not superior to the clock class threshold in S402):** That the first clock class is superior to the clock class threshold includes that the first clock class is less than or equal to (that is, ≤) the clock class threshold.

The clock class threshold is a clock class indicating that a clock device is in a mode of normal time signal tracking. For example, the clock class threshold is 6, and that the first clock class is superior to the clock class threshold (for example, 6) is that the first clock class is less than or equal to (that is, ≤) the clock class threshold (for example, 6), that is, the first clock class is not greater than the clock class threshold (for example, 6). In a specific embodiment, the first device determines whether the first clock class is greater than the clock class threshold (for example, 6). When determining that the first clock class is not greater than the clock class threshold (for example, 6), the first device determines that the first clock class is superior to the clock class threshold (for example, 6).

**Case 2 (corresponding to the case 2 in which the first clock class is not superior to the clock class threshold in S402):** That the first clock class is superior to the clock class threshold includes that the first clock class is less than the clock class threshold.

The clock class threshold is a clock class indicating that a clock device loses a time signal and the clock device is in a mode of being available in holdover time. For example, the clock class threshold is 7, and that the first clock class is superior to the clock class threshold is that the first clock class is less than the clock class threshold. In a specific embodiment, the first device determines whether the first clock class is less than the clock class threshold (for example, 7). When determining that the first clock class is less than the clock class threshold, the first device determines that the first clock class is superior to the clock class threshold.

**Case 3 (corresponding to the case 3 in which the first clock class is not superior to the clock class threshold in S402):** That the first clock class is superior to the clock class threshold includes that the first clock class is in a clock class set.

The clock class threshold is in the clock class set. A clock class in the clock class set includes a clock class (for example, 6) indicating that a clock device is in a mode of normal time signal tracking, and/or a clock class (for example, 7) indicating that a clock device loses a time signal and the clock device is in a mode of being available in holdover time, and/or a default clock class (for example, 127). For example, the clock class set is any one of the following: {6}, {7}, {127}, {6, 127}, {7, 127}, {6, 7}, and {6, 7, 127}.

In a specific embodiment, the first device determines whether the first clock class is in the clock class set. When determining that the first clock class is in the clock class set, the first device determines that the first clock class is superior to the clock class threshold.

In this embodiment of this application, the clock source determined by the first device based on the first quantity of hops in the first dataset and the second quantity of hops in the second dataset may be a grandmaster clock source or a master clock source. The grandmaster clock source is a clock server. The master clock source is located between the clock server and the first device, and the master clock source is on the clock synchronization path (for example, the 1588 synchronization path). For example, the master clock source is a previous-hop device of the first device, and the master clock source is on the clock synchronization path (for example, the 1588 synchronization path). The master clock source is a previous-hop tracking source device of the first device. In an optional embodiment, when the first device determines that the first clock class is superior to the clock class threshold, the first device determines the clock source based on the first quantity of hops in the first dataset and the second quantity of hops in the second dataset according to the shortest path principle. For example, the first quantity of hops is a quantity of hops through which the first clock message passes from the first clock server to the first device, and the second quantity of hops is a quantity of hops through which the second clock message passes from the second clock server to the first device. In an embodiment, the first dataset further includes the first clock identity, and the second dataset further includes the second clock identity. The first device determines the first clock server based on the first clock identity, and the first device determines the second clock server based on the second clock identity. The first clock server and the second clock server are not a same clock server. The first device determines, based on the first quantity of hops in the first dataset and the second quantity of hops in the second dataset according to the shortest path principle, a clock server closer (for example, closest) to the first device in the first clock server and the second clock server as the clock source. In this case, the clock source determined by the first device is a grandmaster clock source. In another embodiment, the first dataset further includes the first clock identity, and the second dataset further includes the second clock identity. The first device determines the first clock server based on the first clock identity, and the first device determines the second clock server based on the second clock identity. The first clock server and the second clock server are a same clock server. The first device determines a smallest quantity of hops in the first quantity of hops and the second quantity of hops, the first device determines a transmission path of a clock message corresponding to the smallest quantity of hops as the clock synchronization path, and the first device determines a previous-hop device of the first device on the clock synchronization path as the clock source. In this case, the clock source determined by the first device is a master clock source. Further, the first device adjusts time of the first device based on time information (for example, GM information) carried in the clock message corresponding to the smallest quantity of hops, to perform time synchronization with the clock source. For an implementation process in which the first device determines the clock source according to the shortest path principle, refer to a dataset comparison algorithm part 2 defined in the IEEE 1588v2 standard. Details are not described herein again in this embodiment of this application.

In an optional embodiment, the preset condition in S402 includes that the first clock class is equal to the second clock class. That is, when the first clock class is equal to the second clock class, the first device determines whether the first clock class in the first dataset is superior to the clock class threshold. It may be understood that when the first clock class is equal to the second clock class, "the first device determines whether the first clock class in the first dataset is superior to the clock class threshold" may be replaced with "the first device determines whether the second clock class in the second dataset is superior to the clock class threshold", S402 may be replaced with "the first device determines a clock source based on the first clock identity and the second clock identity when the second clock class is not superior to the clock class threshold", and S403 may be replaced with "the first device determines a clock source based on the first quantity of hops in the first dataset and the second quantity of hops in the second dataset when the second clock class is superior to the clock class threshold". That is, when the first clock class is equal to the second clock class, the first device may compare either of the first clock class and the second clock class with the clock class threshold to determine whether to determine the clock source based on the clock identity or determine the clock source according to the shortest path principle. This is not limited in this embodiment of this application.

In this embodiment of this application, after the first device determines the clock source, the first device adjusts the time of the first device based on time information (for example, GM information) carried in a clock message received from the clock source, to perform time synchronization with the clock source. In an embodiment, when the first clock class is not superior to the clock class threshold, and the first clock identity is the same as the second clock identity, the first device adjusts the time of the first device based on time information carried in a clock message that passes through a smallest quantity of hops in the received first clock message and second clock message, to perform time synchronization.

In an optional embodiment, after determining the clock source, the first device determines a 1588 status of a port in the first device based on the clock message received by the first device and the clock source determined by the first device, so that a 1588 synchronization path in the communication network in which the first device is located can be determined based on a 1588 status that is of a port in each device in the communication network and that is determined by each device. For example, the communication network in which the first device is located is the 1588 network shown in FIG. 1. When the first dataset and the second dataset meet the preset condition, and the first clock class is superior to the clock class threshold, each device in the 1588 network determines a clock source according to the shortest path principle. The 1588 status of the port that is determined by each device in the 1588 network based on a received clock message and the determined clock source is shown in FIG. 3, and 1588 synchronization paths that are determined based on the 1588 status of the port in each device in the 1588 network and that correspond to the base stations 1 to 5 are shown in FIG. 3. When the first dataset and the second dataset meet the preset condition, the first clock class is not superior to the clock class threshold, and the first clock identity is different from the second clock identity, each device in the 1588 network determines a clock source based on a smallest clock identity in the first clock identity and the second clock identity. The 1588 status of the port that is determined by each device in the 1588 network based on a received clock message and the determined clock source is shown in FIG. 2, and 1588 synchronization paths that are determined based on the 1588 status of the port in each device in the 1588 network and that correspond to the base stations 1 to 5 are shown in FIG. 2.

In conclusion, in the technical solution provided in this embodiment of this application, when the first clock class is not superior to the clock class threshold, it indicates that clock performance corresponding to the first clock class is poor. Therefore, the first device determines the clock source based on the first clock identity and the second clock identity, so that when the first clock class is not superior to the clock class threshold, clock sources determined by different devices may be a same clock source (for example, a grandmaster clock source). For example, when the first clock class is not superior to the clock class threshold and the first clock identity is different from the second clock identity, clock sources determined by different devices may be a same grandmaster clock source, and different devices may track a same grandmaster clock source. This can reduce a difference in time synchronization accuracy between different devices, and improve the time synchronization accuracy. When the first clock class is superior to the clock class threshold, it indicates that clock performance corresponding to the first clock class is good. Therefore, the first device determines the clock source based on the first quantity of hops and the second quantity of hops, so that a clock message (for example, a clock message received by the first device from the clock source) corresponding to the clock source determined by the first device can pass through a small quantity (for example, a smallest quantity) of hops to reach the first device. This helps improve time synchronization accuracy of the first device. In addition, in the technical solution provided in this embodiment of this application, the clock class threshold is configurable. Therefore, flexibility of determining, by the device, the clock source based on the clock class and the flexibly configured clock class threshold is high, and it can be ensured that the clock class threshold is compatible with the current ITU-T G.8275.1 standard and the ITU-T G.8275.2 standard. In the technical solution provided in this embodiment of this application, it can be ensured that a time deviation between different devices (for example, base stations) is maintained within a required range (for example, 3 µs), and it can be ensured that a 5G service can work normally.

It should be noted that "S401", "S402", and "S403" are merely used as numbers of steps in this embodiment of this application, and are not used to limit an execution sequence of the steps in this embodiment of this application. A sequence of the steps in this embodiment of this application may be adjusted, and the steps may be appropriately added or deleted. For example, based on a relationship between the first clock class and the clock class threshold, only one of S402 and S403 needs to be actually performed.

As described above, when determining that the first dataset and the second dataset meet the preset condition, the first device determines whether the first clock class in the first dataset is superior to the clock class threshold, and then determines, based on a determining result, to perform S402 or S403. In an optional embodiment, when the first device determines that the first dataset and the second dataset do not meet the preset condition, the first device determines, based on a condition that the first dataset and the second dataset do not meet the preset condition, the clock server identified by the first clock identity or the clock server identified by the second clock identity as the clock source.

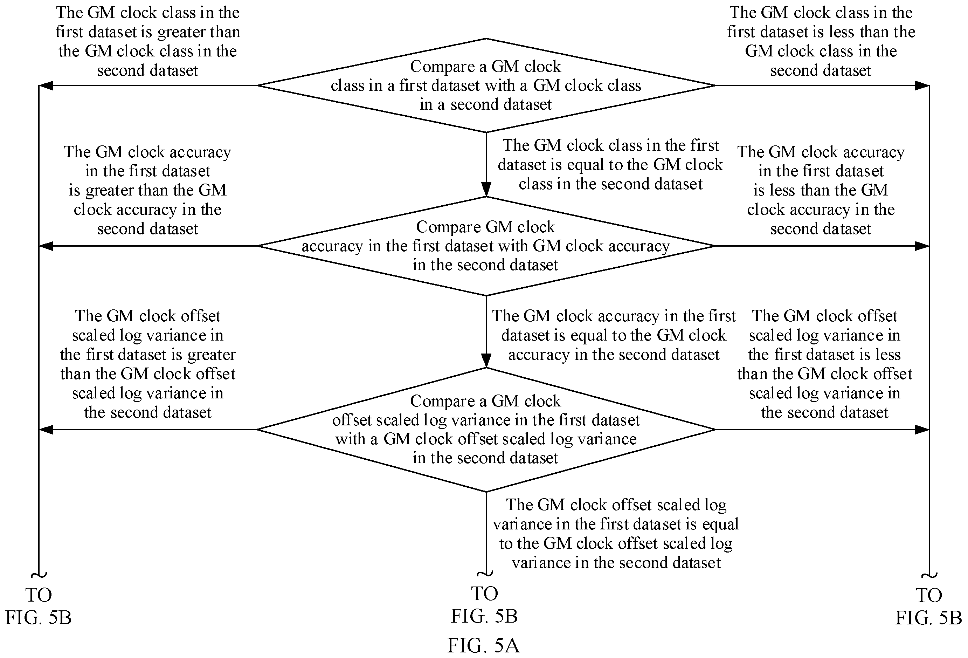

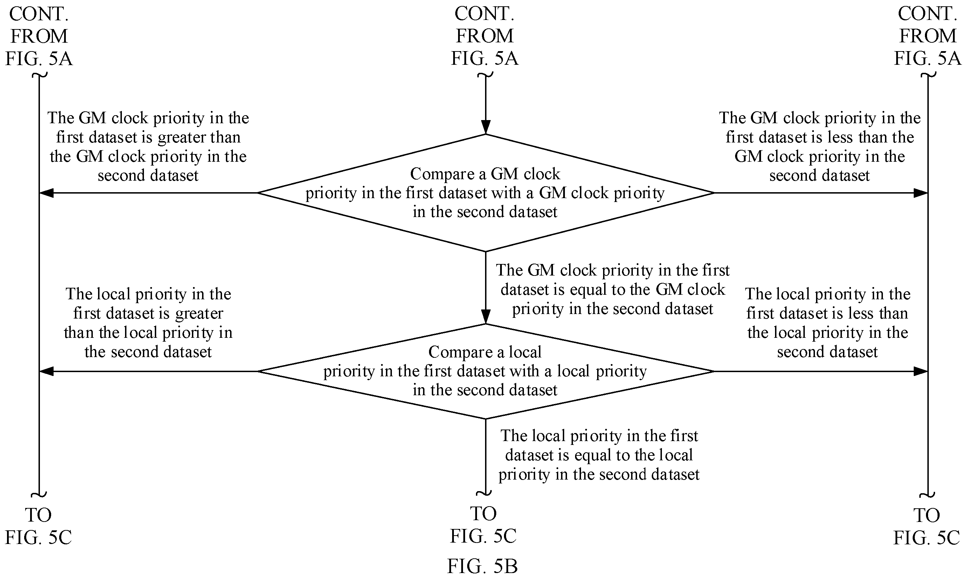

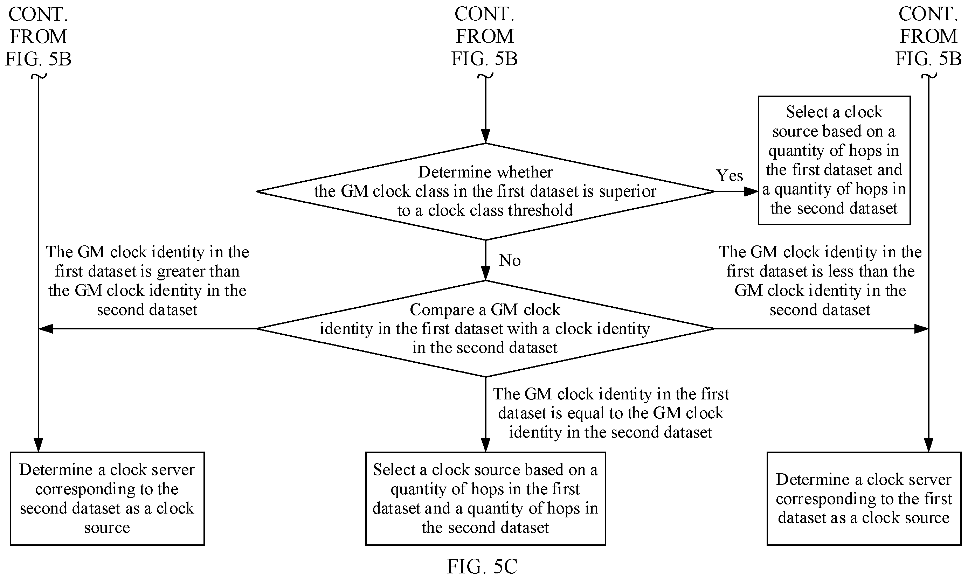

An example in which the first dataset includes the first clock class, the first clock identity, the first clock accuracy, the first clock offset scaled log variance, the first clock priority, the first local priority, and the first quantity of hops, and the second dataset includes the second clock class, the second clock identity, the second clock accuracy, the second clock offset scaled log variance, the second clock priority, the second local priority, and the second quantity of hops is used for description. For example, both the first clock class and the second clock class are GM clock classes, both the first clock identity and the second clock identity are GM clock identities, both the first clock accuracy and the second clock accuracy are GM clock accuracy, both the first clock offset scaled log variance and the second clock offset scaled log variance are GM clock offset scaled log variances, and both the first clock priority and the second clock priority are GM clock priorities (for example, GM clock priorities 2). Each of the first clock class, the first clock identity, the first clock accuracy, the first clock offset scaled log variance, the first clock priority, the first local priority, the first quantity of hops, the second clock class, the second clock identity, the second clock accuracy, the second clock offset scaled log variance, the second clock priority, the second local priority, and the second quantity of hops is expressed by using a value. The preset condition includes: The first clock class is equal to the second clock class, the first clock accuracy is equal to the second clock accuracy, the first clock offset scaled log variance is equal to the second clock offset scaled log variance, the first clock priority is equal to the second clock priority, and the first local priority is equal to the second local priority. In an example, FIG. 5A, FIG. 5B, and FIG. 5C are a flowchart of another clock source selection method according to an embodiment of this application. An example in which the clock source selection method shown in FIG. 5A, FIG. 5B, and FIG. 5C is performed by a first device is used for description.

As shown in FIG. 5A, FIG. 5B, and FIG. 5C, after the first device obtains a first dataset and a second dataset, the first device sequentially compares a GM clock class in the first dataset with a GM clock class in the second dataset, GM clock accuracy in the first dataset with GM clock accuracy in the second dataset, a GM clock offset scaled log variance in the first dataset with a GM clock offset scaled log variance in the second dataset, a GM clock priority in the first dataset with a GM clock priority in the second dataset, and a local priority (namely, a first local priority) in the first dataset with a local priority (namely, a second local priority) in the second dataset. When the first device determines, through comparison, that the GM clock class in the first dataset is equal to the GM clock class in the second dataset, the GM clock accuracy in the first dataset is equal to the GM clock accuracy in the second dataset, the GM clock offset scaled log variance in the first dataset is equal to the GM clock offset scaled log variance in the second dataset, the GM clock priority in the first dataset is equal to the GM clock priority in the second dataset, and the local priority in the first dataset is equal to the local priority in the second dataset, the first device determines that the first dataset and the second dataset meet a preset condition, and then the first device determines whether the GM clock class in the first dataset is superior to a clock class threshold. When determining that the GM clock class in the first dataset is superior to the clock class threshold, the first device selects a clock source based on a quantity of hops in the first dataset and a quantity of hops in the second dataset according to a shortest path principle. The first device determines a clock source based on a GM clock identity in the first dataset and a GM clock identity in the second dataset when the GM clock class in the first dataset is not superior to the clock class threshold. Specifically, the first device compares the GM clock identity in the first dataset with the GM clock identity in the second dataset. When determining that the GM clock identity in the first dataset is equal to the GM clock identity in the second dataset, the first device selects a clock source and determines a clock synchronization path based on the quantity of hops in the first dataset and the quantity of hops in the second dataset according to the shortest path principle. When determining that the GM clock identity in the first dataset is greater than the GM clock identity in the second dataset, the first device determines a clock server corresponding to the second dataset as the clock source. The clock server corresponding to the second dataset is a source end of a second clock message. When determining that the GM clock identity in the first dataset is less than the GM clock identity in the second dataset, the first device determines a clock server corresponding to the first dataset as the clock source. The clock server corresponding to the first dataset is a source end of a first clock message. That is, when the first device determines that the GM clock identity in the first dataset is not equal to the GM clock identity in the second dataset, the first device determines a clock server identified by a smallest clock identity in the GM clock identity in the first dataset and the clock identity in the second dataset as the clock source. The clock source is a grandmaster clock source.

As shown in FIG. 5A, FIG. 5B, and FIG. 5C, when the first device determines, through comparison, that any GM information in the GM clock class, the GM clock accuracy, the GM clock offset scaled log variance, the GM clock priority, and the local priority in the first dataset is not equal to corresponding GM information in the second dataset, the first device selects a clock source based on smaller GM information in the any GM information in the first dataset and the corresponding GM information in the second dataset. For example, when the first device determines, through comparison, that the GM clock class in the first dataset is greater than the GM clock class in the second dataset, the first device determines the clock server corresponding to the second dataset as the clock source (that is, determines a clock server corresponding to the GM clock class in the second dataset as the clock source). When the first device determines, through comparison, that the GM clock class in the first dataset is less than the GM clock class in the second dataset, the first device determines the clock server corresponding to the first dataset as the clock source (that is, determines a clock server corresponding to the GM clock class in the first dataset as the clock source). That is, when the first device determines, through comparison, that the GM clock class in the first dataset is not equal to the GM clock class in the second dataset, the first device determines a clock server corresponding to a smaller GM clock class in the GM clock class in the first dataset and the GM clock class in the second dataset as the clock source. The clock server corresponding to the smaller GM clock class is a source end of a clock message including the smaller GM clock class. When the first device determines, through comparison, that the GM clock class in the first dataset is equal to the GM clock class in the second dataset, the first device compares the GM clock accuracy in the first dataset with the GM clock accuracy in the second dataset. When the first device determines, through comparison, that the GM clock accuracy in the first dataset is greater than the GM clock accuracy in the second dataset, the first device determines the clock server corresponding to the second dataset as the clock source (that is, determines a clock server corresponding to the GM clock accuracy in the second dataset as the clock source). When the first device determines, through comparison, that the GM clock accuracy in the first dataset is less than the GM clock accuracy in the second dataset, the first device determines the clock server corresponding to the first dataset as the clock source (that is, determines a clock server corresponding to the GM clock accuracy in the first dataset as the clock source). That is, when the first device determines, through comparison, that the GM clock accuracy in the first dataset is not equal to the GM clock accuracy in the second dataset, the first device determines a clock server corresponding to smaller GM clock accuracy in the GM clock accuracy in the first dataset and the GM clock accuracy in the second dataset as the clock source. The clock server corresponding to the smaller GM clock accuracy is a source end of a clock message including the smaller GM clock accuracy. When the first device determines, through comparison, that the GM clock accuracy in the first dataset is equal to the GM clock accuracy in the second dataset, the first device compares the GM clock offset scaled log variance in the first dataset with the GM clock offset scaled log variance in the second dataset. Similarly, when the first device determines, through comparison, that the GM clock offset scaled log variance in the first dataset is not equal to the GM clock offset scaled log variance in the second dataset, the first device determines a clock server corresponding to a smaller GM clock offset scaled log variance in the GM clock offset scaled log variance in the first dataset and the GM clock offset scaled log variance in the second dataset as the clock source. The clock server corresponding to the smaller GM clock offset scaled log variance is a source end of a clock message including the smaller GM clock offset scaled log variance. When the first device determines, through comparison, that the GM clock offset scaled log variance in the first dataset is equal to the GM clock offset scaled log variance in the second dataset, the first device compares the GM clock priority in the first dataset with the GM clock priority in the second dataset. When the first device determines, through comparison, that the GM clock priority in the first dataset is not equal to the GM clock priority in the second dataset, the first device determines a clock server corresponding to a smaller GM clock priority in the GM clock priority in the first dataset and the GM clock priority the second dataset as the clock source. The clock server corresponding to the smaller GM clock priority is a source end of a clock message including the smaller GM clock priority. When the first device determines, through comparison, that the GM clock priority in the first dataset is equal to the GM clock priority in the second dataset, the first device compares the local priority in the first dataset with the local priority in the second dataset. When the first device determines, through comparison, that the local priority in the first dataset is not equal to the local priority in the second dataset, the first device determines a clock server corresponding to a smaller local priority in the local priority in the first dataset and the local priority in the second dataset as the clock source. The clock server corresponding to the smaller local priority is a source end of a target clock message in the first clock message and the first clock message, and the target clock message is received by the first device through a port with the smaller local priority. When the first device determines, through comparison, that the local priority in the first dataset is equal to the local priority in the second dataset, the first device determines whether the GM clock class in the first dataset is superior to the clock class threshold.

As described above, the clock class threshold is a clock class (for example, 6) indicating that a clock device is in a mode of normal time signal tracking, that the first clock class is not superior to the clock class threshold is that the first clock class is greater than the clock class threshold, and that the first clock class is superior to the clock class threshold is that the first clock class is less than or equal to (that is, ≤) the clock class threshold. Alternatively, the clock class threshold is a clock class (for example, 7) indicating that a clock device loses a time signal and the clock device is in a mode of being available in holdover time, that the first clock class is not superior to the clock class threshold is that the first clock class is greater than or equal to (that is, ≥) the clock class threshold, and that the first clock class is superior to the clock class threshold is that the first clock class is less than the clock class threshold. Alternatively, the clock class threshold is in a clock class set, that the first clock class is not superior to the clock class threshold includes that the first clock class is not in the clock class set, and that the first clock class is superior to the clock class threshold includes that the first clock class is in the clock class set. The clock device may be a clock server or a network device having a clock function.

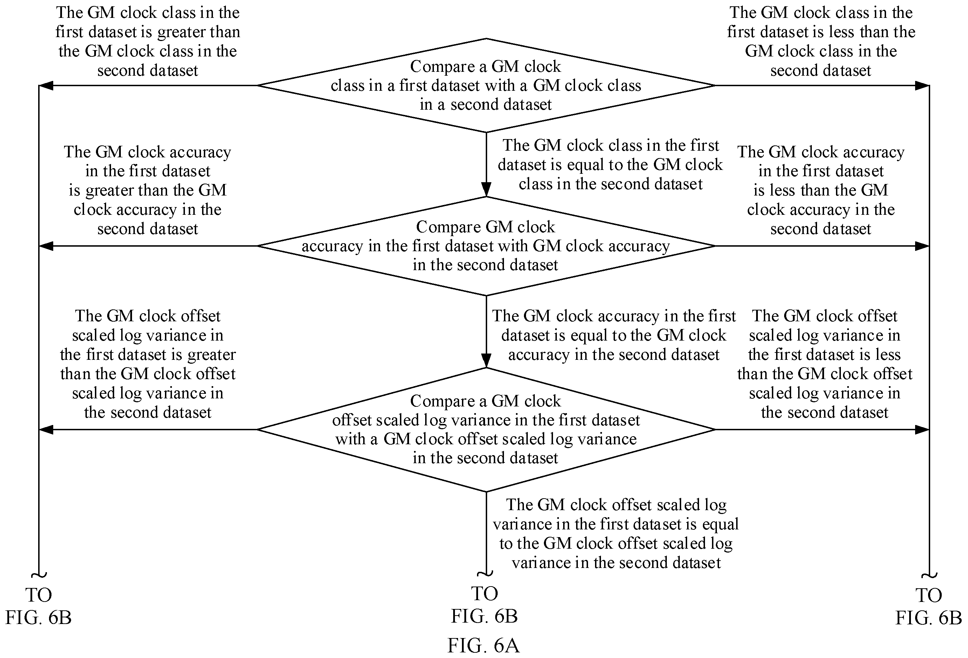

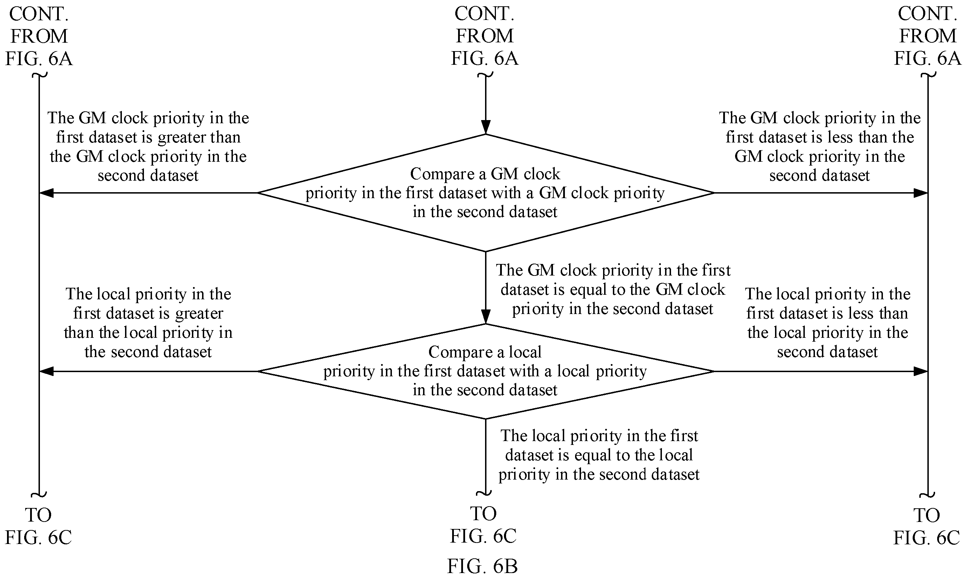

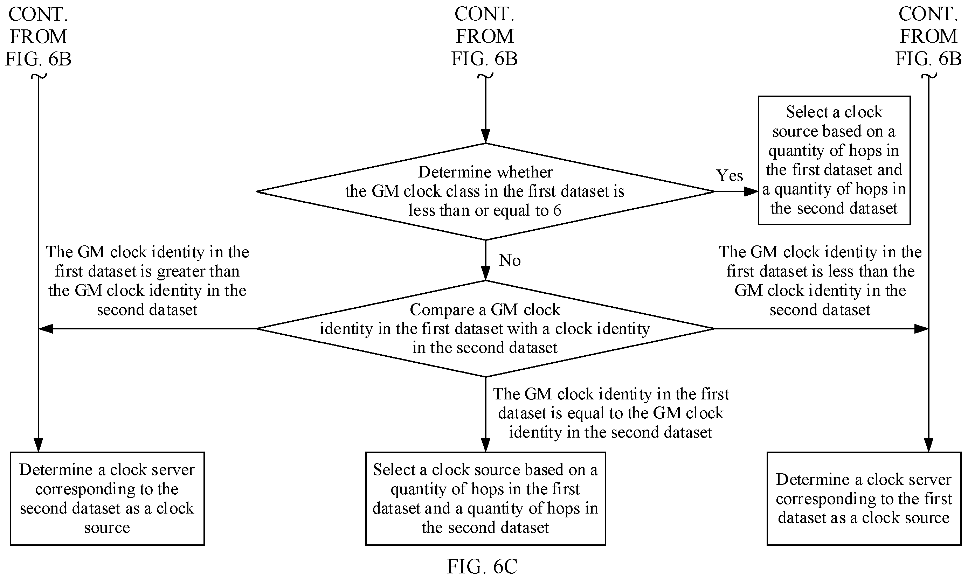

In an embodiment, the clock class threshold is 6, that the first clock class is not superior to the clock class threshold is that the first clock class is greater than 6, and that the first clock class is superior to the clock class threshold is that the first clock class is less than or equal to (that is, ≤) 6. In this embodiment, a clock source selection method provided in an embodiment of this application is shown in FIG. 6A, FIG. 6B, and FIG. 6C. A difference between FIG. 6A, FIG. 6B, and FIG. 6C and FIG. 5A, FIG. 5B, and FIG. 5C lies in that "determine whether the GM clock class in the first dataset is superior to the clock class threshold" in FIG. 5A, FIG. 5B, and FIG. 5C is replaced with "determine whether the GM clock class in the first dataset is less than or equal to 6".

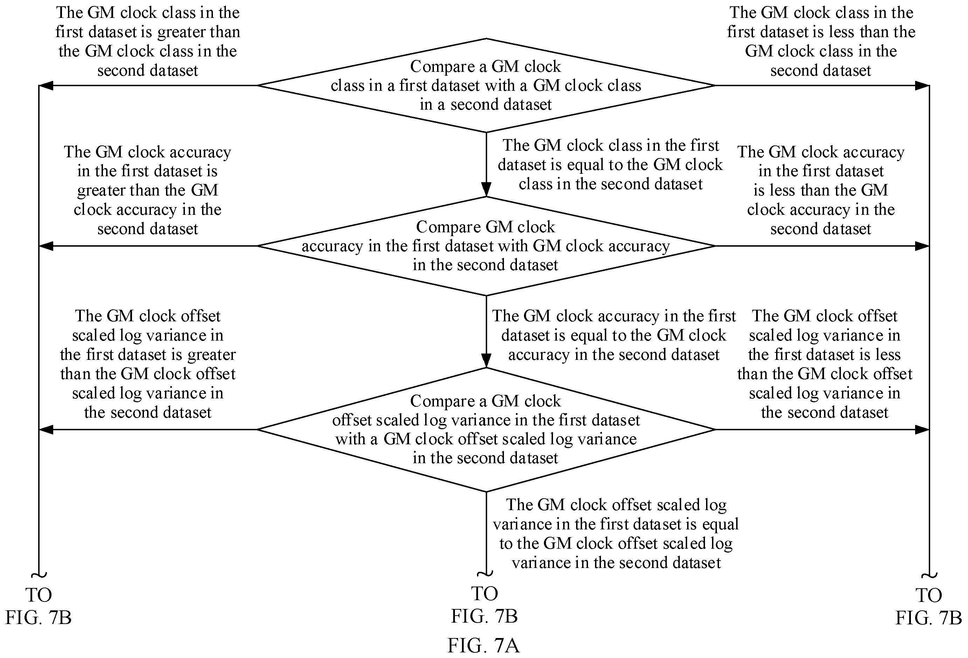

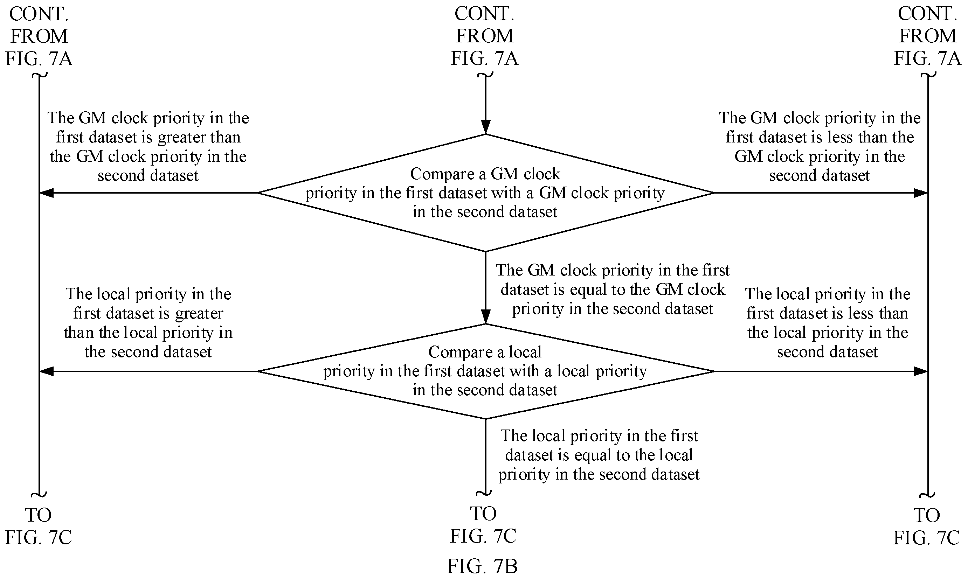

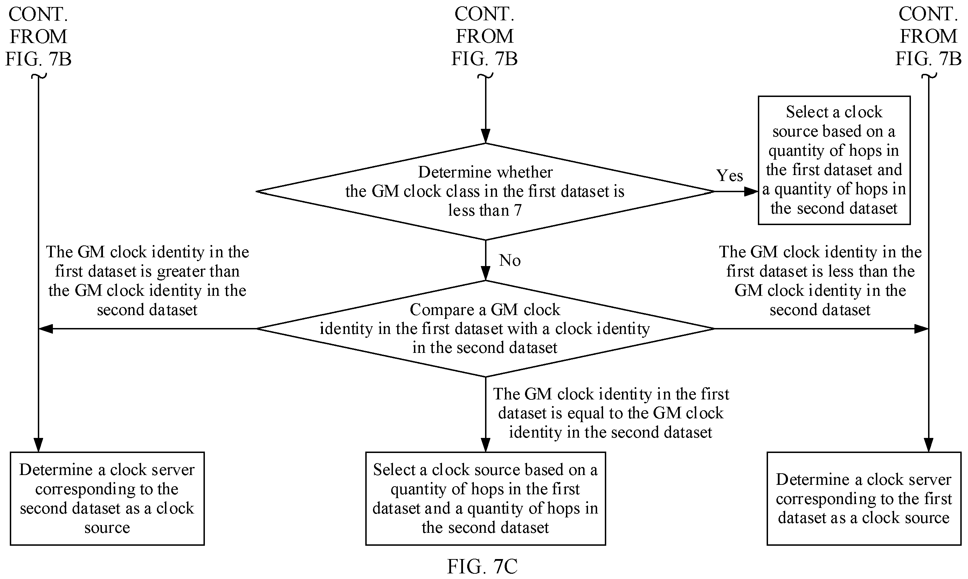

In another embodiment, the clock class threshold is 7, that the first clock class is not superior to the clock class threshold is that the first clock class is greater than or equal to (that is, ≥) 7, and that the first clock class is superior to the clock class threshold is that the first clock class is less than 7. In this embodiment, a clock source selection method provided in an embodiment of this application is shown in FIG. 7A, FIG. 7B, and FIG. 7C. A difference between FIG. 7A, FIG. 7B, and FIG. 7C and FIG. 5A, FIG. 5B, and FIG. 5C lies in that "determine whether the GM clock class in the first dataset is superior to the clock class threshold" in FIG. 5A, FIG. 5B, and FIG. 5C is replaced with "determine whether the GM clock class in the first dataset is less than 7".

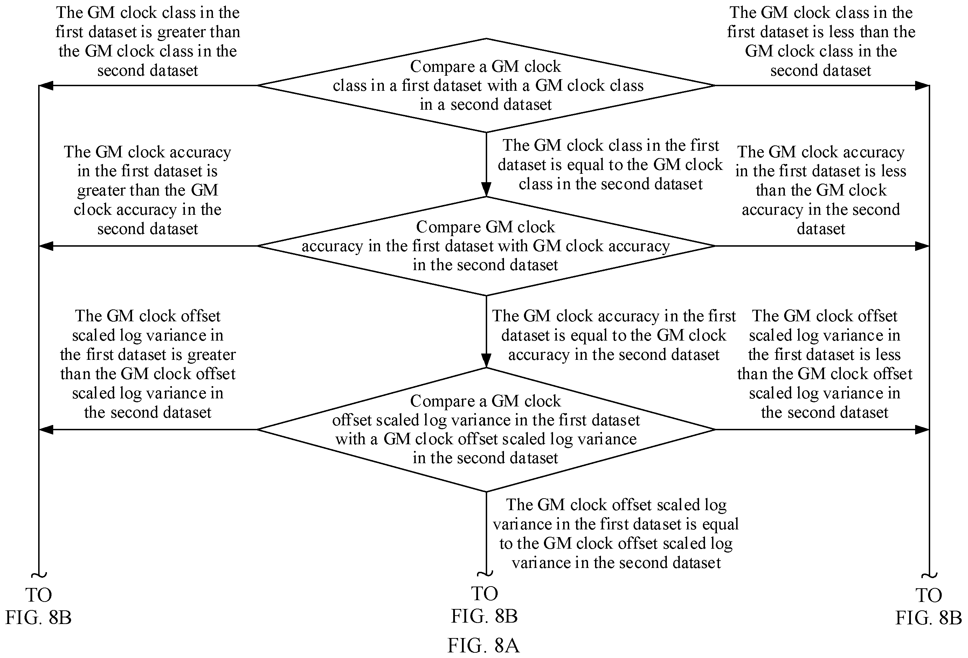

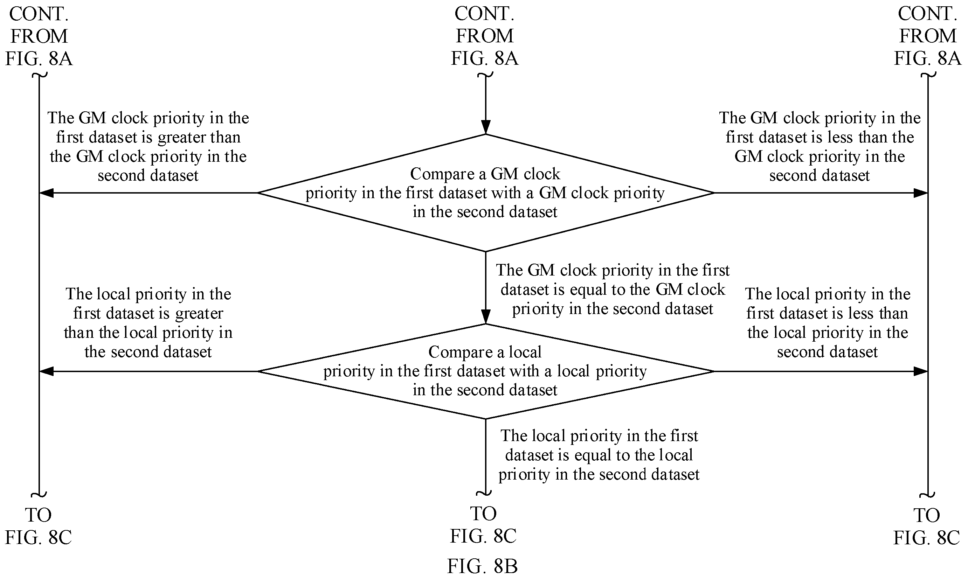

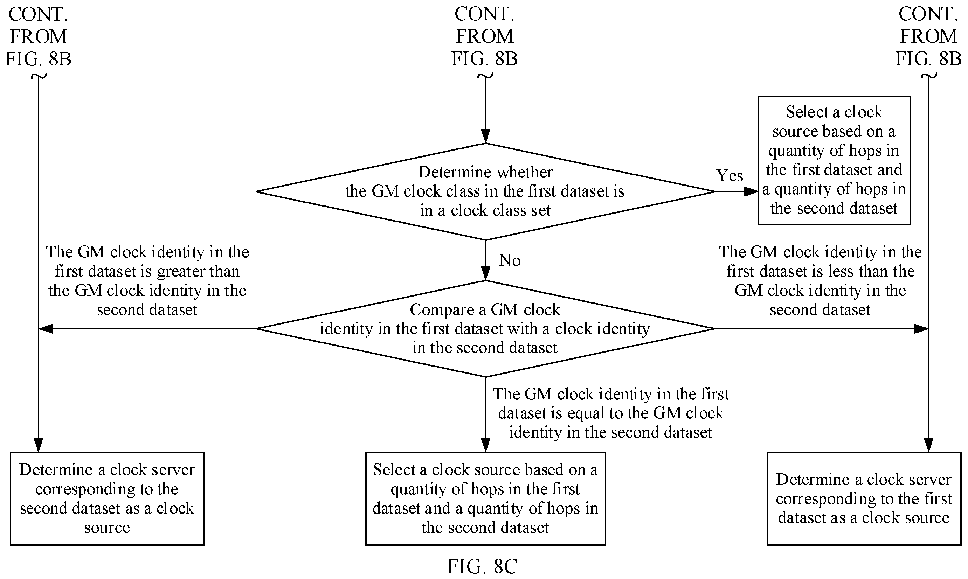

In still another embodiment, that the first clock class is not superior to the clock class threshold includes that the first clock class is not in the clock class set, and that the first clock class is superior to the clock class threshold includes that the first clock class is in the clock class set. In this embodiment, a clock source selection method provided in an embodiment of this application is shown in FIG. 8A, FIG. 8B, and FIG. 8C. A difference between FIG. 8A, FIG. 8B, and FIG. 8C and FIG. 5A, FIG. 5B, and FIG. 5C lies in that "determine whether the GM clock class in the first dataset is superior to the clock class threshold" in FIG. 5A, FIG. 5B, and FIG. 5C is replaced with "determine whether the GM clock class in the first dataset is in the clock class set".

For related descriptions of the embodiments shown in FIG. 6A, FIG. 6B, and FIG. 6C to FIG. 8A, FIG. 8B, and FIG. 8C, refer to the descriptions of the embodiment shown in FIG. 5A, FIG. 5B, and FIG. 5C. Details are not described herein again.

It should be noted that when a GM clock class of a clock device (for example, a clock server) is greater than 6, for example, when the GM clock class of the clock device (for example, the clock server) is greater than or equal to 7, the clock device (for example, the clock server) loses a time signal and is in a time holdover mode. With reference to the embodiments shown in FIG. 6A, FIG. 6B, and FIG. 6C and FIG. 7A, FIG. 7B, and FIG. 7C, it may be learned that when the GM clock class in the first dataset is greater than 6 (for example, ≥7), and the GM clock identity in the first dataset is not equal to the GM clock identity in the second dataset, the first device determines a clock server identified by a smallest clock identity in the GM clock identity in the first dataset and the GM clock identity in the second dataset as the clock source, and another device in the communication network in which the first device is located determines a clock source based on this. Therefore, clock sources determined by different devices in the communication network are a same clock server, and different devices in the communication network track a same clock server. This can ensure that a time deviation between different devices (for example, base stations) in the communication network is maintained within 3 µs. When the GM clock class in the first dataset is less than 6, the first device determines the clock source according to the shortest path principle. Therefore, clock sources determined by different devices in the communication network may be different, different devices in the communication network may track different clock servers, and each device tracks a clock server with a shortest path to the device. This can ensure time synchronization accuracy, and ensure that a time deviation between different devices (for example, base stations) in the communication network is maintained within 3 µs. That is, when a clock signal is poor (for example, the GM clock class is greater than 6), devices in the communication network track a same clock server; or when a clock signal is good (for example, the GM clock class is less than or equal to 6), a device in the communication network tracks a clock server with a shortest path to the device. This helps ensure time synchronization accuracy.

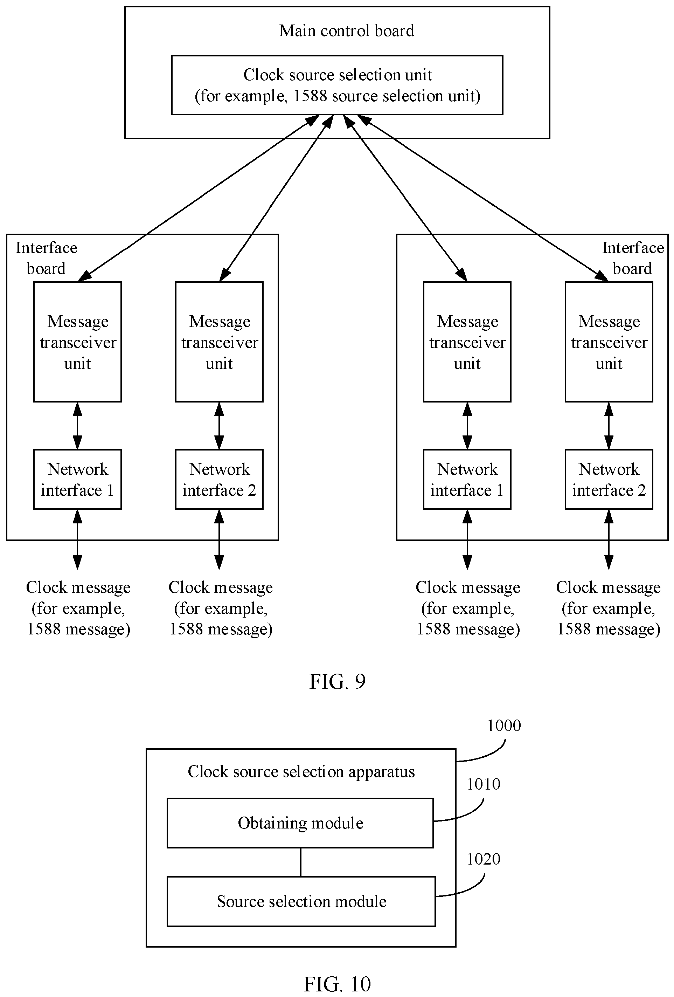

In embodiments of this application, the first device includes a main control board and at least one interface board. The main control board includes a clock source selection unit. The interface board includes a message transceiver unit and a network interface. The network interface is configured to receive a clock message. The message transceiver unit is configured to transmit the clock message between the network interface and the clock source selection unit. The clock source selection unit is configured to: perform all or some of the steps in the clock source selection method provided in embodiments of this application to perform clock source selection, and determine a 1588 status of each network interface of the first device. For example, the clock source selection unit is configured to generate a dataset based on the clock message transmitted by the message transceiver unit, and then perform clock source selection based on the dataset. For example, the clock source selection unit is a 1588 source selection unit, and the clock message is a 1588 message. In an example, the first device is shown in FIG. 9.

The foregoing describes method embodiments of this application. The following describes apparatus embodiments of this application. The apparatus in this application may be configured to perform the method in this application. For details that are not disclosed in the apparatus embodiments of this application, refer to the method embodiments.

FIG. 10 is a diagram of a clock source selection apparatus 1000 according to an embodiment of this application. The clock source selection apparatus 1000 is used in a first device. For example, the clock source selection apparatus 1000 is the first device or a functional component in the first device. For example, the clock source selection apparatus 1000 is a clock source selection unit in the first device shown in FIG. 9. The clock source selection apparatus 1000 is configured to perform the clock source selection method provided in any one of the embodiments in FIG. 4 to FIG. 8A, FIG. 8B, and FIG. 8C. For example, the first device is any NE in the NEs 1 to 10 or any base station in the base stations 1 to 5 in the 1588 network shown in FIG. 1. A clock server in the following descriptions includes at least one of the 1588 server 1 and the 1588 server 2 in the 1588 network shown in FIG. 1. With reference to FIG. 10, the clock source selection apparatus 1000 includes an obtaining module 1010 and a source selection module 1020.

The obtaining module 1010 is configured to obtain a first dataset and a second dataset, where the first dataset includes a first clock class and a first clock identity, and the second dataset includes a second clock identity. For function implementation of the obtaining module 1010, refer to the related descriptions in S401.

The source selection module 1020 is configured to determine a clock source based on the first clock identity and the second clock identity when the first clock class is not superior to a clock class threshold, where the clock class threshold is configurable. For function implementation of the source selection module 1020, refer to the related descriptions in S402.

Optionally, the first dataset includes a first quantity of hops, the second dataset includes a second quantity of hops, and the source selection module 1020 is further configured to determine a clock source based on the first quantity of hops and the second quantity of hops when the first clock class is superior to the clock class threshold. For function implementation of the source selection module 1020, further refer to the related descriptions in S403.

In an optional embodiment, that the first clock class is not superior to the clock class threshold includes that the first clock class is greater than the clock class threshold, that the first clock class is superior to the clock class threshold includes that the first clock class is less than or equal to (that is, not greater than) the clock class threshold, and the clock class threshold is a clock class indicating that a clock device is in a mode of normal time signal tracking.

In another optional embodiment, that the first clock class is not superior to the clock class threshold includes that the first clock class is greater than or equal to (that is, not less than) the clock class threshold, that the first clock class is superior to the clock class threshold includes that the first clock class is less than the clock class threshold, and the clock class threshold is a clock class indicating that a clock device loses a time signal and the clock device is in a mode of being available in holdover time.

In still another optional embodiment, that the first clock class is not superior to the clock class threshold includes that the first clock class is not in a clock class set, that the first clock class is superior to the clock class threshold includes that the first clock class is in the clock class set, the clock class threshold is in the clock class set, and a clock class in the clock class set includes a clock class indicating that a clock device is in a mode of normal time signal tracking, and/or a clock class indicating that a clock device loses a time signal and the clock device is in a mode of being available in holdover time, and/or a default clock class.

Optionally, the clock device is a clock server (for example, a 1588 server) or a device having a clock function in a time synchronization network.

Optionally, an attribute set defaultDS of the first device includes a clock class set defaultDS.clockClassSet field, and the defaultDS.clockClassSet field is used to record the clock class set.

Optionally, the attribute set defaultDS of the first device includes a clock class threshold defaultDS.clockClassThreshold field, and the defaultDS.clockClassThreshold field is used to record the clock class threshold.

In conclusion, in the technical solution provided in this embodiment of this application, when the first clock class is not superior to the clock class threshold, it indicates that clock performance corresponding to the first clock class is poor. Therefore, the first device determines the clock source based on the first clock identity and the second clock identity, so that when the first clock class is not superior to the clock class threshold, clock sources determined by different devices may be a same clock source. For example, when the first clock class is not superior to the clock class threshold and the first clock identity is different from the second clock identity, clock sources determined by different devices may be a same grandmaster clock source, and different devices may track a same grandmaster clock source. This can reduce a difference in time synchronization accuracy between different devices, and improve the time synchronization accuracy. When the first clock class is superior to the clock class threshold, it indicates that clock performance corresponding to the first clock class is good. Therefore, the first device determines the clock source based on the first quantity of hops and the second quantity of hops, so that a clock message (for example, a clock message received by the first device from the clock source) corresponding to the clock source determined by the first device can pass through a small quantity (for example, a smallest quantity) of hops to reach the first device. This helps improve time synchronization accuracy of the first device. In addition, in the technical solution provided in this embodiment of this application, the clock class threshold is configurable. Therefore, flexibility of determining, by the device, the clock source based on the clock class and the flexibly configured clock class threshold is high, and it can be ensured that the clock class threshold is compatible with the current ITU-T G.8275.1 standard and the ITU-T G.8275.2 standard. In the technical solution provided in this embodiment of this application, it can be ensured that a time deviation between different devices (for example, base stations) is maintained within a required range (for example, 3 µs), and it can be ensured that a 5G service can work normally.

The clock source selection apparatus provided in this embodiment of this application may alternatively be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, the clock source selection apparatus provided in the foregoing method embodiment may be implemented by using software. When the clock source selection method provided in the foregoing method embodiment is implemented by using software, modules in the clock source selection apparatus may be software modules. This is not limited in this embodiment of this application.

An embodiment of this application provides a clock source selection apparatus, including a memory and a processor. The memory is configured to store a computer program. The processor is configured to execute the computer program stored in the memory, to enable the clock source selection apparatus to perform the clock source selection method provided in any one of the embodiments in FIG. 4 to FIG. 8A, FIG. 8B, and FIG. 8C.

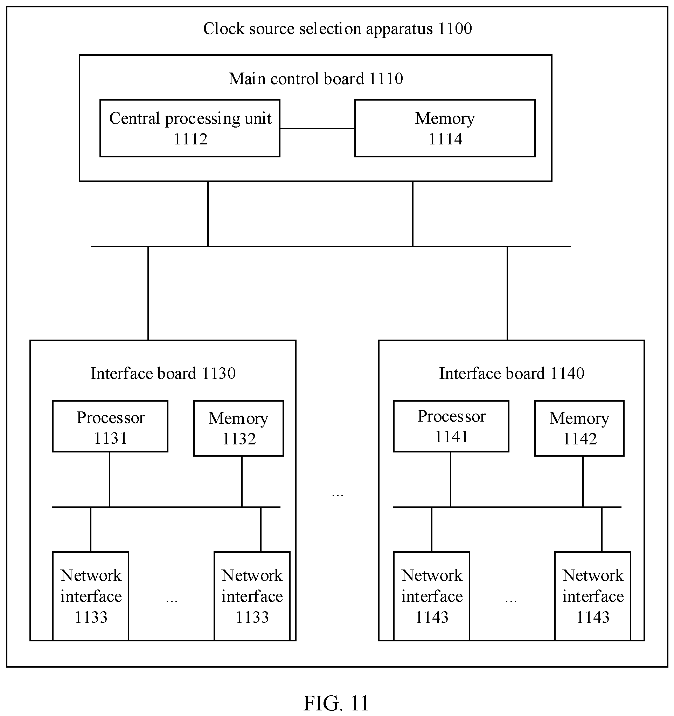

In an example, FIG. 11 is a diagram of another clock source selection apparatus 1100 according to an embodiment of this application. The clock source selection apparatus 1100 is a first device or a functional component in a first device. The first device may be a network device. The clock source selection apparatus 1100 is configured to perform the clock source selection method provided in any one of the embodiments in FIG. 4 to FIG. 8A, FIG. 8B, and FIG. 8C. For example, the first device is any NE in the 1588 network shown in FIG. 1. As shown in FIG. 11, the clock source selection apparatus 1100 includes a main control board 1110, an interface board 1130, and an interface board 1140. In a case of a plurality of interface boards, a switching board (not shown in FIG. 11) is further included, and the switching board is configured to complete data exchange between the interface boards. The main control board is also referred to as a main processing unit (main processing unit, MPU) or a route processor card (route processor card). The interface board is also referred to as a line processing unit (line processing unit, LPU), a line card (line card), a service board, a line board, or the like. The switching board is also referred to as a switch fabric unit (switch fabric unit, SFU).

The main control board 1110 is configured to complete functions such as system management, device maintenance, and protocol processing. The interface board 1130 and the interface board 1140 are configured to: provide service interfaces and implement message forwarding. These service interfaces include, for example, a packet over SONET/SDH (Packet Over SONET/SDH, POS) interface, a gigabit Ethernet (gigabit Ethernet, GE) interface, an asynchronous transfer mode (asynchronous transfer mode, ATM) interface, and the like. The main control board 1110 mainly includes three types of functional units: a system management and control unit, a system clock unit, and a system maintenance unit. The main control board 1110, the interface board 1130, and the interface board 1140 are connected to a system backboard through a system bus to implement interworking. The interface board 1130 includes one or more processors 1131. The processor 1131 is configured to: control and manage the interface board 1130 and communicate with a central processing unit 1112 on the main control board 1110. A memory 1132 on the interface board 1130 is configured to store forwarding information such as a forwarding table. The interface board 1130 includes one or more network interfaces 1133, configured to receive and send a message. Specific implementation is not described herein again. As shown in FIG. 11, the main control board 1110 further includes a memory 1114. The memory 1114 is configured to store system management information, a protocol, and the like. In this application, the main control board 1110 includes a clock source selection unit (for example, a 1588 source selection unit) to perform the clock source selection algorithm.

As shown in FIG. 11, this embodiment includes a plurality of interface boards and uses a distributed forwarding mechanism. In this mechanism, an operation on the interface board 1140 is basically similar to an operation on the interface board 1130. For example, the interface board 1140 includes one or more network interfaces 1143 for receiving and sending a message, includes a memory 1142 for storing a forwarding table, and includes a processor 1141 for controlling and managing the interface board 1140 and communicating with the central processing unit 1112 on the main control board 1110. For brevity, the interface board 1140 is not described herein again.

The processor 1131 in the interface board 1130 and/or the processor 1141 in the interface board 1140 in FIG. 11 may be dedicated hardware or a chip, for example, a network processor (network processor, NP) or an application-specific integrated circuit, to implement the foregoing functions. This implementation is usually referred to as a manner of using dedicated hardware or a chip for processing on a forwarding plane. In another implementation, the processor 1131 in the interface board 1130 and/or the processor 1141 in the interface board 1140 may be a general-purpose processor, for example, a central processing unit (central processing unit, CPU).

In addition, it should be noted that there may be one or more main control boards. When there are a plurality of main control boards, the main control boards may include an active main control board and a standby main control board. There may be one or more interface boards. A network device with a stronger data processing capability provides a larger quantity of interface boards. In a case of a plurality of interface boards, the plurality of interface boards may communicate with each other through one or more switching boards, and load sharing and redundancy backup may be jointly implemented by the plurality of interface boards. In a centralized forwarding architecture, the network device may not need a switching board, and the interface board provides a function of processing service data of an entire system. In a distributed forwarding architecture, the network device includes a plurality of interface boards, data exchange between the plurality of interface boards may be implemented by using the switching board, and a large-capacity data exchange and processing capability is provided. Therefore, a data access and processing capability of the network device in the distributed architecture is greater than that of the network device in the centralized architecture. An architecture to be used depends on a networking deployment scenario. This is not limited herein.

In an optional implementation, the memory 1114 and/or the memory 1132 and/or the memory 1142 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compressed optical disc, a laser disc, an optical disc, a digital versatile optical disc, a Blu-ray disc, and the like), a magnetic disk or another magnetic storage device, or any other medium that can be configured to carry or store expected program code in a form of instructions or a data structure and that can be accessed by a computer. However, this is not limited thereto. The memory 1132 may exist independently, and is connected to the processor 1131 through a communication bus, or may be integrated with the processor 1131. The memory 1142 may exist independently, and is connected to the processor 1141 through a communication bus, or may be integrated with the processor 1141. The memory 1114 may exist independently, and is connected to the central processing unit 1112 through a communication bus, or may be integrated with the central processing unit 1112. This is not limited in this embodiment of this application.

The memory 1114 is configured to store program code, and the central processing unit 1112 controls execution to perform some or all of the steps in the method provided in the foregoing embodiments. The central processing unit 1112 is configured to execute the program code stored in the memory 1114. The program code may include one or more software modules. The one or more software modules may be the functional modules provided in the embodiment shown in FIG. 7A, FIG. 7B, and FIG. 7C. Optionally, the memory 1132 may alternatively be configured to store program code, and the processor 1131 controls execution to perform some or all of the steps in the method provided in the foregoing embodiments. The memory 1142 may alternatively be configured to store program code, and the processor 1141 controls execution to perform some or all of the steps in the method provided in the foregoing embodiments. This is not limited in this embodiment of this application.

In an optional implementation, the network interface 1133 and the network interface 1143 may be apparatuses that use any transceiver, and are configured to communicate with another device or a communication network, for example, the Ethernet, a radio access network (radio access network, RAN), or a wireless local area network (wireless local area network, WLAN). The communication bus may be classified into an address bus, a data bus, a control bus, and the like.

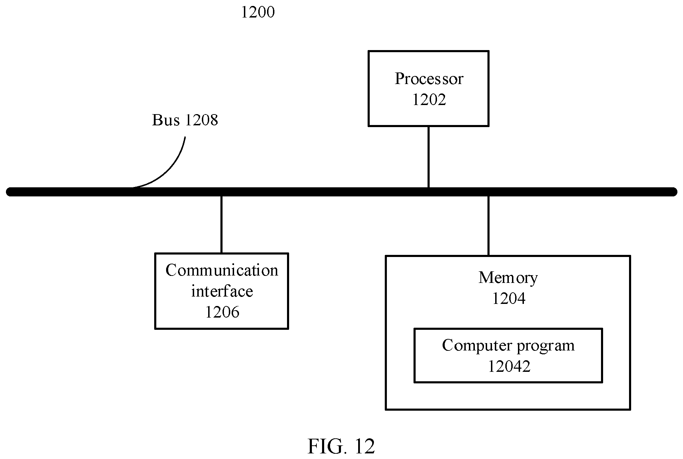

In another example, FIG. 12 is a diagram of still another clock source selection apparatus 1200 according to an embodiment of this application. The clock source selection apparatus 1200 is a first device or a functional component in a first device. The first device may be a network device or a base station. For example, the first device is any NE or any base station in the 1588 network shown in FIG. 1. The clock source selection apparatus 1200 is configured to perform the clock source selection method provided in any one of the embodiments in FIG. 4 to FIG. 8A, FIG. 8B, and FIG. 8C. As shown in FIG. 12, the clock source selection apparatus 1200 includes a processor 1202, a memory 1204, a communication interface 1206, and a bus 1208. The processor 1202, the memory 1204, and the communication interface 1206 are communicatively connected by using the bus 1208. In another embodiment, the processor 1202, the memory 1204, and the communication interface 1206 may alternatively be connected in another manner.

The memory 1204 is configured to store a computer program 12042. The computer program 12042 may include instructions and data. The memory 1204 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1202 may be a general-purpose processor. The general-purpose processor may be a processor that performs a specific step and/or operation by reading and executing a computer program (for example, the computer program 12042) stored in a memory (for example, the memory 1204). The general-purpose processor may use data stored in the memory in a process of performing the foregoing step and/or operation. The stored computer program may be executed to implement related functions of the obtaining module 1010, the source selection module 1020, and the like. The general-purpose processor may be a CPU. The processor 1202 may alternatively be a dedicated processor. The dedicated processor is a processor specially designed to perform a specific step and/or operation. The dedicated processor may be a digital signal processor (digital signal processor, DSP), an ASIC, an FPGA, or the like. The processor 1202 may alternatively be a multi-core processor. The processor 1202 includes at least one circuit, to perform all or some of the steps in the method in the foregoing embodiments.

The communication interface 1206 may include an input/output (input/output, I/O) interface, a physical interface, a logical interface, and another interface that are configured to implement interconnection between components inside the clock source selection apparatus 1200, and an interface that is configured to implement interconnection between the clock source selection apparatus 1200 and another device (for example, a network device). The physical interface may be a gigabit Ethernet (gigabit Ethernet, GE) interface, and may be configured to implement interconnection between the clock source selection apparatus 1200 and another device. The logical interface is an internal interface of the clock source selection apparatus 1200, and may be configured to implement interconnection between components inside the clock source selection apparatus 1200. It is easy to understand that the communication interface 1206 may be used by the clock source selection apparatus 1200 to communicate with another device. For example, the communication interface 1206 is used to send and receive a message between the clock source selection apparatus 1200 and the another device.

The bus 1208 may be any type of communication bus, for example, a system bus, configured to implement interconnection between the processor 1202, the memory 1204, and the communication interface 1206. The bus 1208 may be classified into an address bus, a data bus, a control bus, and the like. For ease of representation, only one thick line is used for representation in FIG. 12, but this does not mean that there is only one bus or only one type of bus.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Specific implementation forms of the foregoing components are not limited in this embodiment of this application.

The clock source selection apparatus 1200 shown in FIG. 12 is merely used as an example, and the clock source selection apparatus 1200 may further include other components. The clock source selection apparatus 1200 selects a clock source by performing all or some of the steps in the method provided in the foregoing embodiments, to perform time synchronization with the clock source.

It should be noted that the port, the interface, the network interface, the communication interface, and the like in the descriptions of the foregoing embodiments may have a same meaning.

Based on a same inventive concept, an embodiment of this application provides a communication system, including a first device and at least two clock devices. The first device includes the clock source selection apparatus shown in any one of FIG. 10 to FIG. 12. The first device is configured to determine a clock source in the at least two clock devices. The at least two clock devices include at least one of a clock server or a network device having a clock function.

Based on a same inventive concept, an embodiment of this application provides a computer-readable storage medium. The computer-readable storage medium stores a computer program. When the computer program is executed (for example, executed by a network device, a base station, or one or more processors), all or some of the steps in the clock source selection method provided in the foregoing method embodiments are implemented.

Based on a same inventive concept, an embodiment of this application provides a computer program product. The computer program product includes a program or code. When the program or the code is executed (for example, executed by a network device, a base station, or one or more processors), all or some of the steps in the clock source selection method provided in the foregoing method embodiments are implemented.

An embodiment of this application provides a chip. The chip includes a programmable logic circuit and/or program instructions. When running, the chip is configured to implement all or some of the steps in the clock source selection method provided in the foregoing method embodiments. Optionally, the chip is a processing chip.

All or some of the foregoing embodiments may be implemented by using software, hardware, firmware, or any combination thereof. When the software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or includes a data storage apparatus, for example, a server or a data center, into which one or more usable media are integrated. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "a plurality of" means two or more. In this application, unless otherwise specified, the symbol "/" usually means "or". For example, A/B may represent A or B. The term "and/or" in this application is merely an association relationship for describing associated objects and represents that three relationships may exist. For example, A and/or B may represent the following three cases: Only A exists, both A and B exist, and only B exists. In addition, for ease of clear description, in this application, the words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be mutually referenced. A sequence of the operations in the method embodiments can be properly adjusted, and the operations can be correspondingly added or deleted based on a situation. Any variation method that can be easily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division into the modules is merely logical function division and there may be other division manners in actual implementation. For example, a plurality of modules or components may be combined or may be integrated to another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms. The modules described as separate parts may or may not be physically separate, and the parts described as modules may or may not be physical modules, may be located at one location, or may be distributed on a plurality of network nodes. Some or all of the modules may be selected based on actual requirements to achieve the objectives of the solutions in embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A clock source selection method, wherein the method comprises:
obtaining, by a first device, a first dataset and a second dataset, wherein the first dataset comprises a first clock class and a first clock identity, and the second dataset comprises a second clock identity; and
determining, by the first device, a clock source based on the first clock identity and the second clock identity when the first clock class is not superior to a clock class threshold, wherein the clock class threshold is configurable.

2. The method according to claim 1, wherein the first dataset comprises a first quantity of hops, the second dataset comprises a second quantity of hops, and the method further comprises: determining, by the first device, a clock source based on the first quantity of hops and the second quantity of hops when the first clock class is superior to the clock class threshold.

3. The method according to claim 1 or 2, wherein that the first clock class is not superior to the clock class threshold comprises that the first clock class is greater than the clock class threshold.

4. The method according to claim 3, wherein the clock class threshold is a clock class indicating that a clock device is in a mode of normal time signal tracking.

5. The method according to claim 1 or 2, wherein that the first clock class is not superior to the clock class threshold comprises that the first clock class is greater than or equal to the clock class threshold.

6. The method according to claim 5, wherein the clock class threshold is a clock class indicating that a clock device loses a time signal and the clock device is in a mode of being available in holdover time.

7. The method according to claim 1 or 2, wherein that the first clock class is not superior to the clock class threshold comprises that the first clock class is not in a clock class set.

8. The method according to claim 7, wherein the clock class threshold is in the clock class set, and a clock class in the clock class set comprises a clock class indicating that a clock device is in a mode of normal time signal tracking, and/or a clock class indicating that a clock device loses a time signal and the clock device is in a mode of being available in holdover time, and/or a default clock class.

9. The method according to claim 8, wherein an attribute set defaultDS of the first device comprises a clock class set defaultDS.clockClassSet field, and the defaultDS.clockClassSet field is used to record the clock class set.

10. The method according to any one of claims 1 to 9, wherein the attribute set defaultDS of the first device comprises a clock class threshold defaultDS.clockClassThreshold field, and the defaultDS.clockClassThreshold field is used to record the clock class threshold.

11. A clock source selection apparatus, used in a first device, wherein the apparatus comprises:
an obtaining module, configured to obtain a first dataset and a second dataset, wherein the first dataset comprises a first clock class and a first clock identity, and the second dataset comprises a second clock identity; and
a source selection module, configured to determine a clock source based on the first clock identity and the second clock identity when the first clock class is not superior to a clock class threshold, wherein the clock class threshold is configurable.

12. The apparatus according to claim 11, wherein the first dataset comprises a first quantity of hops, the second dataset comprises a second quantity of hops, and the source selection module is further configured to determine a clock source based on the first quantity of hops and the second quantity of hops when the first clock class is superior to the clock class threshold.

13. The apparatus according to claim 11 or 12, wherein that the first clock class is not superior to the clock class threshold comprises that the first clock class is greater than the clock class threshold.

14. The apparatus according to claim 13, wherein the clock class threshold is a clock class indicating that a clock device is in a mode of normal time signal tracking.

15. The apparatus according to claim 11 or 12, wherein that the first clock class is not superior to the clock class threshold comprises that the first clock class is greater than or equal to the clock class threshold.

16. The apparatus according to claim 15, wherein the clock class threshold is a clock class indicating that a clock device loses a time signal and the clock device is in a mode of being available in holdover time.

17. The apparatus according to claim 11 or 12, wherein that the first clock class is not superior to the clock class threshold comprises that the first clock class is not in a clock class set.

18. The apparatus according to claim 17, wherein the clock class threshold is in the clock class set, and a clock class in the clock class set comprises a clock class indicating that a clock device is in a mode of normal time signal tracking, and/or a clock class indicating that a clock device loses a time signal and the clock device is in a mode of being available in holdover time, and/or a default clock class.

19. The apparatus according to claim 18, wherein an attribute set defaultDS of the first device comprises a clock class set defaultDS.clockClassSet field, and the defaultDS.clockClassSet field is used to record the clock class set.

20. The apparatus according to any one of claims 11 to 19, wherein the attribute set defaultDS of the first device comprises a clock class threshold defaultDS.clockClassThreshold field, and the defaultDS.clockClassThreshold field is used to record the clock class threshold.

21. A clock source selection apparatus, comprising a memory and a processor, wherein
the memory is configured to store a computer program; and
the processor is configured to execute the computer program stored in the memory, to enable the clock source selection apparatus to perform the method according to any one of claims 1 to 10.

22. A communication system, comprising a first device and at least two clock devices, wherein the first device comprises the clock source selection apparatus according to any one of claims 11 to 20, and the first device is configured to determine a clock source in the at least two clock devices.

23. A computer-readable storage medium, wherein the computer-readable storage medium stores a computer program, and when the computer program is executed, the method according to any one of claims 1 to 10 is implemented.

24. A computer program product, wherein the computer program product comprises a program or code, and when the program or the code is executed, the method according to any one of claims 1 to 10 is implemented.

25. A chip, wherein when the chip runs, the method according to any one of claims 1 to 10 is implemented.
